(19) Europäisches Patentamt
European Patent Office
Office européen des brevets

(11) EP 0 768 320 A1

(12) EUROPEAN PATENT APPLICATION

(43) Date of publication:
16.04.1997 Bulletin 1997/16

(51) Int Cl.6: C08F 4/642, C08F 10/02

(21) Application number: 96850163.5

(22) Date of filing: 27.09.1996

(84) Designated Contracting States:
DE FR GB

(30) Priority: 29.09.1995 JP 277154/95

(71) Applicant: NIPPON OIL CO. LTD.
Minato-ku Tokyo (JP)

(72) Inventors:
- Seki, Takashi, c/o Japan Polyolefins Co., Ltd.
Kawasaki-ku, Kawasaki-shi, Kanagawa-ken (JP)
- Sano, Akira, c/o Japan Polyolefins Co., Ltd.
Kawasaki-ku, Kawasaki-shi, Kanagawa-ken (JP)
- Matsuura, Kazuo, c/o Japan Polyolefins Co., Ltd.
Kawasaki-ku, Kawasaki-shi, Kanagawa-ken (JP)
- Numao, Yosuke, c/o Nippon Oil Co., Ltd.
Yokohama-shi, Kanagawa-ken (JP)

(74) Representative: Modin, Jan et al
c/o Axel Ehrners Patentbyra AB
Box 10316
100 55 Stockholm (SE)

# (54) Catalyst component and catalyst

(57) A catalyst component for the polyemrization of olefinic hydrocarbons comprises a modified metallocene compound derived from a starting metallocene compound of the formula

$$R^1{}_pMe^1X^1{}_{4-p} \text{ or } R^1{}_2Me^1X^{1'} \qquad I$$

wherein $Me^1$ is a transition metal of Group IVa in the Periodic Table, $R^1$ is a ligand selected from the group consisting of a cyclopentadienyl group, a substituted cyclopentadienyl group, an indenyl group, a substituted indenyl group, a fluorenyl group and a substituted fluorenyl group, which may be bonded together through a $C_2$-$C_{18}$ hydrocarbon group and/or a silylene group, said substituted cyclopnetadineyl, said substituted indenyl group and said substituted fluorenyl group each having at least one hydrogen atom directly bonded to their respective 5-member rings, $X^1$ is a halogen atom, a hydrogen atom or a $C_1$-$C_{24}$ hydrocarbon moiety, p is $1 \le p \le 4$ and $X^{1'}$ is a $C_1$-$C_{20}$ alkylidene group; said modified metallocene compound having a 5-member ring free of hydrogen peak in 1H-NHR spectrum and said 5-member ring belonging to said ligand.

A catalyst is also disclosed, which essentially comprised the above catalyst component in one aspect and a combination in another aspect of a metallocene compound mutually contacted with a modified organoaluminum compound having Al-O-Al bonds and borate and/or borane.

The catalyst is characterized by the absence of hydrogen peaks at the 5-member ring in the constituent groups of the metallocene compound.

EP 0 768 320 A1

## Description

This invention relates to catalyst components and also a catalyst comprising the same. The invention further relates to a process using this catalyst for the production of olefinic homopolymers or copolymers.

As disclosed in Japanese Patent Laid-Open Publication No. 58-19309, it has been proposed to produce ethylene homopolymers or ethylene-α-olefin copolymers among various polyolefins with use of a catalyst composition comprising a zirconium compound, typically a methallocene compound and an aluminoxane. It is also known to use a catalyst composition comprising a zirconium compound, typically a zirconocene compound, borate and/or borane. The disclosed prior art catalysts contribute to the production of homopolymers having a narrow molecular weight distribution and copolymer having a narrow composition distribution at a satisfactory rate of yield.

In order to provide increased polymer yields using such prior art catalysts, it would be necessary to use large quantities of aluminoxane to transition metals such as zirconium. However, aluminoxane, particularly methylaluminoxane, is very costly.

Japanese Laid-Open Patent Publications No. 63-218707 and No. 60-280802 discloses a process for the production of homopolmers at an increased rate of yeild while reducing the quantities of aluminoxane; however, there appears to be no marked improvement in regard to aluminoxane usage.

The zirconium compound-borate and/or borane catalyst has also drawback in that borate and borane are costly. Furthermore, this type of catalyst is often soluble in the polymerization reaction system and when used in slurry or gas-phase polymerization, tends to give a polymer product having reduced bulk density and hence degraded granular properties.

Known as catalyst components for polymerizing olefinic hydrocarbons are metallocene compounds such as bis(cyclopentadienyl)zirconiumdichloride, bis(1,3-dimethylcyclopentadienyl)zirconiumdichloride, bis(indenyl)zirconiumdichloride and ethylenebisindenylzirconiumdichloride. These compounds are commonly used together with modified aluminum compounds, typically methylaluminoxane. However, such a metallocene compound when brought into contact with a modified aluminoxane tends to suffer reduced catalytic activity due to its metal components (such as titanium, zirconium and hafnium) undergoing dimerization progressive with time.

When metallocene compounds are measured in the liquid state for 1H-NMR (nuclear magenetic resonance), there is observed a peak of hydrogen in the 5-member ring in the cyclopentadienyl, indenyl or fluorenyl structure. For instance, the hydrogen peak in bis(cyclopentadienyl)zirconiumdichloride may be observed where the chemical shift δ is equal to 6.1 ppm and that in bis(1,3-dimethylcyclopentadienyl)zirconiumdichloride is seen where 6 is equal to 6.0 ppm and/or 5.7 ppm. In the case of bis(indenyl)zirconiumdichloride, the hydrogen peak in the 5-member ring of the indenyl group is observed where δ is equal to 6.3 ppm and/or 6.0 ppm. A similar peak may be monitored in ethylenebisindenylzirconiumdichloride where δ is equal to 5.9 ppm, 6.1 ppm, 6.6 ppm and 6.8 ppm, respectively.

It has now been found that if 1H-NMR analysis of a solution of a given metallocene compound failed to reveal the presence of hydrogen at the 5-member ring of the cyclopentadienyl, indenyl or fluorenyl group coordinated with its metal component, then the metallocene compound could be successfully contacted with a modified organoaluminum compound such as aluminoxane without encountering a reduction in the catalytic activity. It has also been found that the use of such metallocene compound as a catalyst component is conducive to the production of polymers having a high molecular weight and a wide molecular weight distribution and copolymers having a high molecular weight and a narrow composition distribution at an increased rate of yield even with use of reduced quantities of aluminoxane.

According to a first aspect of the invention, there is provided a catalyst component for the polyemrization of olefinic hydrocarbons which comprises a modified metallocene compound derived from a starting metallocene compound of the formula

$$R^1{}_pMe^1X^1{}_{4-p} \text{ or } R^1{}_2Me^1X^{1'} \qquad \text{I}$$

wherein $Me^1$ is a transition metal of Group IVa in the Periodic Table, $R^1$ is a ligand selected from the group consisting of a cyclopentadienyl group, a substitued cyclopentadienyl group, an indenyl group, a substituted indenyl group, a fluorenyl group and a substituted fluorenyl group, which may be bonded together through a $C_2$-$C_{18}$ hydrocarbon group and/or a silylene group, said substituted cyclopnetadineyl, said substituted indenyl group and said substituted fluorenyl group each having at least one hydrogen atom directly bonded to their respective 5-member rings, $X^1$ is a halogen atom, a hydrogen atom or a $C_1$-$C_{24}$ hydrocarbon moiety, p is $1 \leq p \leq 4$ and $X^{1'}$ is a $C_1$-$C_{20}$ alkylidene group; said modified metallocene compound having a 5-member ring free of hydrogen peak in 1H-NMR spectrum and said 5-member ring belonging to said ligand.

According to a second aspect of the invention, there is provided a polymerization catalyst resulting from mutual contact of a modified metallocene compound with a modified organoaluminum compound having Al-O-Al bonds and/or borate and/or borane; said modified metallocene compound being derived from a starting metallocene compound of formula

$$R^1{}_pMe^1X^1{}_{4-p} \text{ or } R^1{}_2Me^1X_{1'} \qquad I$$

wherein $Me^1$ is a transition metal of Group IVa in the Periodic Table, $R^1$ is a ligand selected from the group consisting of a cyclopentadienyl group, a substitued cyclopentadienyl group, an indenyl group, a substituted indenyl group, a fluorenyl group and a substituted fluorenyl group, which may be bonded together through a $C_2$-$C_{18}$ hydrocarbon group and/or a silylene group, said substituted cyclopnetadineyl, said substituted indenyl group and said substituted fluorenyl group each having at least one hydrogen atom directly bonded to their respective 5-member rings, $X^1$ is a halogen atom, a hydrogen atom or a $C_1$-$C_{24}$ hydrocarbon moiety, p is $1 \le p \le 4$ and $X^{1'}$ is a $C_1$-$C_{20}$ alkylidene group; said modified metallocene compound having a 5-member ring free of hydrogen peak in 1H-NMR spectrum and said 5-member ring belonging to said ligand.

According to a third aspect of the invention, there is provided a polymerization catalyst resulting from mutual contact of a metallocene compound with a modified organoaluminum compound having Al-O-Al bonds and/or borate and/or borane; said metallocene compound being represented by the formula

$$R^1{}_pMe^1X^1{}_{4-p} \text{ or } R^1{}_2Me^1X^{1'} \qquad I$$

wherein $Me^1$ is a transition metal of Group IVa in the Periodic Table, $R^1$ is a ligand selected from the group consisting of a cyclopentadienyl group, a substitued cyclopentadienyl group, an indenyl group, a substituted indenyl group, a fluorenyl group and a substituted fluorenyl group which may be bonded together through a $C_2$-$C_{18}$ hydrocarbon group and/or a silylene group, said substituted cyclopnetadineyl, the substituted indenyl group and said substituted fluorenyl group each having at least one hydrogen atom directly bonded to their respective 5-member ring, $X^1$ is a halogen atom, a hydrogen atom or a $C_1$-$C_{24}$ hydrocarbon moiety, p is $1 \le p \le 4$ and $X^{1'}$ is a $C_1$-$C_{20}$ alkylidene group; said catalyst having a 5-member ring free of hydrogen peak in 1H-NMR spectrum and said 5-member ring belonging to said ligand.

According to a forth aspect of the invention, there is provided a process for the production of olefinic polymers or copolymers in the presence of either of the above catalysts.

The inventive catalyst component comprises a modified metallocene compound derived from the metallocen compound (a) represented by the formula

$$R^1pMe^1X^1{}_{4-p} \text{ or } R^1{}_2Me^1X^{1'} \qquad I$$

where $R^1$ is a cyclopentadienyl group, a substituted cyclopentadienyl group, an indenyl group, a substituted indenyl group, a fluorenyl group or a substituted fluorenyl group, $R^1$ may be bonded to another $R^1$ through a $C_2$-$C_{18}$ hydrocarbon group and/or a silylene group and the substituted cyclopentadienyl group, the substituted indenyl group and the substituted fluorenyl group have at least one hydrogen atom bonded directly to the 5-member ring position.

The substituents of the aforesaid substituted groups are $C_1$-$C_{24}$, preferably $C_1$-$C_{18}$, more preferably $C_1$-$C_{12}$ hydrocarbon groups including an alkyl group such as methyl, ethyl, propyl, isopropyl, butyl, t-butyl, pentyl, hexyl and octyl; an alkenyl group such as vinyl and allyl; an aryl group such as phenyl, tolyl and xylyl; and an aralkyl group such as benzyl, phenethyl, styryl and neophyl.

The hydrocarbon group bonding R1 to another $R^1$ exemplarily includes an alkylene group such as methylene, ethylene, trimethylene and isopropynylene; an aryl-substituted alkylene group such as diphenylmethylene, methylphenylmethylene and ditolylmethylene; an alkenyl-substituted alkylen group such as divinylethylene and diallylmethylene; an aralkyl-substituted alkylene group such as benzyl, phenethyl, styryl and neophyl; and an alkylidene group such as methylidene, ethylidene, propylidene and isopropylidene. The silylene group exemplarily includes an alkyl-substituted silylene group such as dimethylsilylene and diethylsilylene; an aryl-substituted silylene group such as diphenylsilylene, methylphenyisilylene and ditolylsilylene; an alkenyl-substituted silylene group such as divinylsilylene and diallylsilylene; and an aralkyl-substituted silylene such as benzylsilylene, phenethylsilylene, styrylsilylene and neophylsilylene.

$Me^1$ in formula I is a transition metal of Group IVa in the Periodic Table such as zirconium, hafnium and titanium.

$X^1$ in formula I is a halogen atom such as chlorine, bromine, fluorine and iodine, a hydrogen atom or a $C_1$-$C_{24}$ hydrocarbon moieties such as an alkyl group such as methyl group, ethyl group, propyl group, isopropyl group, butyl group, t-butyl group, pentyl group, hexyl group and octyl group; an alkenyl group such as vinyl group and allyl group;

an alkoxy group such as methoxy group, ethoxy group, propoxy group and butoxy group; an aryl group such as phenyl group, tolyl group and xylyl group and an aryloxy group such as phenoxy group; an aralkyl group such as benzyl group, phenethyl group, styryl group and neophyl group.

$X^{1'}$ in formula I is a C1-C20 alkylidene group such as methylidene, ethylidene and propylidene.

p in formula I is an intger of between 1 and 4, preferably 1 and 3.

The metallocene compound (a) exemplarily and specifically includes cyclopentadienyltrimethyltitanium, methylcyclopentadienyltrimethyititanium, 1,2-dimethylcyclopentadienyltrimethyltitanium, 1,2,4-trimethylcyclopentadienyltrimethyltitanium, 1,2,3,4-tetramethylcyclopentadienyltrimethyltitanium, cyclopentadienylmethyltitaniumdichloride, cyclopentadienyldimethyltitaniummonochloride, cyclopentadienyltitaniumtrimethoxide, cyclopentadienyltitaniumtriethoxide, cyclopentadienyltitaniumtripropoxide, cyclopentadienyltitaniumtriphenoxide, cyclopentadienyltitaniumtrichloride, cyclopentadienylmethoxytitaniumdichloride, cyclopentadienyldimethoxytitraniumchloride, cyclopentadienyltribenzyltitanium, indenyltitaniumtrichloride, indenyltitaniumtrimethoxide, indenyltitaniumtriethoxide, indenyltrimethyltitanium, indenyltribenzyltitanium, cyclopentadienyltrimethylzirconium, methylcyclopentadienyltrimethylzirconium, 1,2-dimethylcyclopentadienyltrimethylzirconium, 1,2,4-trimethylcyclopentadienyltrimethylzirconium, 1,2,3,4-tetramethylcyclopentadienyltrimethylzirconium, cyclopentadienylmethylzirconiumdichloride, cyclopentadienylethylzirconiumdichloride, cyclopentadienyldimethylzirconiummonochloride, cyclopentadienylzirconiumtrimethoxide, cyclopentadienylzirconiumtriethoxide, cyclopentadienylzirconiumtripropoxide, cyclopentadienylzirconiumtriphenoxide, cyclopencadienylzirconiumtrichloride, cyclopentadienylmethoxyzirconiumdichloride, cyclopentadienyldimethoxyzirconiumchloride, cyclopentadienyltribenzylzirconium, indenylzirconiumtrichloride, indenylzirconiumtrimethoxide, indenylzirconiumtriethoxide, indenyltrimethylzirconium, indenyltribenzylzirconium, cyclopentadienyltrimethylhafnium, methylcyclopentadienyltrimethylhafnium, 1,2-dimethylcyclopentadienyltrimethylhafnium, 1,2,4-trimethylcyclopentadienyltrimethylhafnium, 1,2,3,4-tetramethylcyclopentadienyltrimethylhafnium, cyclopentadienylmethylhafniumdichloride, cyclopentadienylethylhafniumdichloride, cyclopentadienyldimethylhafniummonochloride, cyclopentadienylhafniumtrimethoxide, cyclopencadienylhafniumtriethoxide, cyclopentadienylhafniumtripropoxide, cyclopentadienylhafniumtriphenoxide, cyclopentadienylhafniumtrichloride, cyclopentadienylmethoxyhafniumdichloride, cyclopentadienyldimethoxyhafniumchloride, cyclopentadienyltribenzylhafnium, indenylhafniumtrichloride, indenylhafniumtrimethoxide, indenylhafniumtriethoxide, indenyltrimethylhafnium, indenyltribenzylhafnium, bis(cyclopentadienyl)dichlorotitanium, bis(cyclopentadienyl)methylchlorotitanium, bis(cyclopentadienyl)dimethyltitanium, bis(cyclopentadienyl)ethoxychlorotitanium, bis(cyclopentadienyl)propoxychlorotitanium, bis(cyclopentadienyl)phenoxychlorotitanium, bis(cyclopentadienyl)diphenyltitanium, bis(cyclopentadienyl)titaniumdibenzyl, bis(cyclopentadienyl)titaniummonochloromonohydride, bis(methylcyclopentadienyl)dimethyltitanium, tetracyclopentadienyltitanium, bis(indenyl)dichlorotitanium, bis(indenyl)dimethyltitanium, bis(cyclopentadienyl)dichlorozirconium, bis(cyclopentadienyl)methylchlorozirconium, bis(cyclopentadienyl)dimethylzirconium, bis(cyclopentadienyl)diphenylzirconium, bis(cyclopentadienyl) dibenzylzirconium, bis(indenyl)dichlorozirconium, bis(indenyl)dimethylzirconium, bis(indenyl)diphenylzirconium, bis (indenyl)dibenzylzirconium, bis(methylcyclopentadienyl)dimethylzirconium, bis(cyclopentadienyl)zirconiummonochloromonohydride, bis(cyclopentadienyl)zirconiumdibenzyl, tetracyclopentadienylzirconium, bis(cyclopentadienyl)ethoxychlorozirconium, bis(cyclopentadienyl)propoxychlorozirconium, bis(cyclopentadienyl)phenoxychlorozirconium, bis (cyclopentadienyl)diphenylzirconium, bis(cyclopentadienyl)monomethylmonohydridezirconium, bis(cyclopentadienyl) monophenylmonochloridezirconium, bis(cyclopentadienyl)dimethylhafnium, bis(cyclopentadienyl)dichlorohafnium, bis (cyclopentadienyl)methylchlorohafnium, bis(cyclopentadienyl)phenylchlorohafnium, bis(cyclopentadienyl)diphenylhafnium, bis(cyclopentadienyl)monochloromonohydridehafnium, bis(cyclopentadienyl)monomethylmonohydridehafnium, bis(cyclopentadienyl)dibenzylhafnium, silylenebiscyclopentadienyltitaniumdichloride, dimethylsilylenebiscyclopentadienyltitaniumdichloride, dimethylsilylenebiscyclopentadienyltitaniumdibromide, dimethylsilylenebiscyclopentadienyltitaniumdimethyl, dimethylsilylenebiscyclopentadienyltitaniumdiphenyl, dimethylsilylenebismethylcyclopentadienyltitaniumdichloride, dimethylsilylenebismethylcyclopentadienyltitaniumdibromide, dimethylsilyienebismethylcyclopentadienyltitaniumdimethyl, dimethylsilylenebismethylcyclopentadienyltitaniumdiphenyl, phenylmethylsilylenebiscyclopentadienyltitaniumdichloride, phenylmethylsilylenebiscyclopentadienyltitaniumdibromide, phenylmethyisilylenebiscyclopentadienyltitaniumdimethyl, phenylmethylsilylenebiscyclopentadienyltitaniumdiphenyl, phenylmethylsilylenebismethylcyclopentadienyltitaniumdichloride, phenylmethylsilylenebismethylcyclopentadienyltitaniumdibromide, phenylmethylsilylenebismethylcyclopentadienyltitaniumdimethyl, phenylmethylsilylenebismethylcyclopentadienyltitaniumdiphenyl, diphenylsilylenebiscyclopentadienyltitaniumdichloride, diphenylsilylenebiscyclopentadienyltitaniumdibromide, diphenylsilylenebiscyclopentadienyltitaniumdimethyl, diphenylsilylenebiscyclopentadienyltitaniumdiphenyl, diphenylsilylenebismethylcyclopentadienyltitaniumdichloride, diphenylsilylenebismethylcyclopentadienyltitaniumdibromide, diphenylsilylenebismethylcyclopentadienyltitaniumdimethyl, diphenylsilylenebismethylcyclopentadienyltitaniumdiphenyl, disilylenebiscyclopentadienyltitaniumdichloride, bisdimethylsilylenebiscyclopentadienyltitaniumdichloride, silylenebiscyclopentadienylzirconiumdichloride, silylenebismethylcyclopentadienylzirconiumdichloride, dimethylsilylenebiscyclopentadienylzirconiumdichloride, dimethylsilylenebiscyclopentadienylzirconiumdibromide, dimethylsilylenebiscyclopentadienylzirconiumdimethyl, dimethylsilylenebiscyclopentadienylzirconiumdiphenyl, dimethylsilylenebismethylcyclopentadienylzirconiumdichloride, dimethylsilylenebismethylcyclopentadienylzirconiumdibromide, dimethylsilylenebismethylcyclopentadienylzirconiumdimethyl, dimethylsilylenebismethylcyclopentadienylzirconiumdiphenyl, phenylmethylsilylenebiscyclopentadienylzirconiumdichloride, phenylmethylsilylenebiscyclopentadienylzirconiumdibromide, phenylmethylsilylenebiscyclopentadienylzirconiumdimethyl, phenylmethylsilylenebiscyclopentadienylzirconiumdiphenyl, phenylmethylsilylenebismethylcyclopentadienylzirconiumdichloride, phenylmethylsilylenebismethylcyclopentadienylzirconiumdibromide, phenylmethylsilylenebismethylcyclopentadienylzirconiumdimethyl, phenylmethylsilylenebismethylcyclopentadienylzirconiumdiphenyl, diphenylsilylenebiscyclopentadienylzirconiumdichloride, diphenylsilylenebiscyclopentadienylzirconiumdibromide, diphenylsilylenebiscyclopentadienylzirconiumdimethyl, diphenylsilylenebiscyclopentadienylzirconiumdiphenyl, diphenylsilylenebismethylcyclopentadienylzirconiumdichloride, diphenylsilylenebismethylcyclopentadienylzirconiumdibromide, diphenylsilylenebismethylcyclopentadienylzirconiumdimethyl, diphenylsilylenebismethylcyclopentadienylzirconiumdiphenyl, disilylenebiscyclopentadienylzirconiumdichloride, bisdimethylsilylenebiscyclopentadienylzirconiumdichloride, silylenebiscyclopentadienylhafniumdichloride, silylenebismethylcyclopentadienylhafniumdichloride, dimethylsilylenebiscyclopentadienylhafniumdichloride, dimethylsilylenebiscyclopentadienylhafniumdibromide, dimethylsilylenebiscyclopentadienylhafniumdimethyl, dimethylsilylenebiscyclopentadienylhafniumdiphenyl, dimethylsilylenebismethylcyclopentadienylhafniumdichloride, dimethylsilylenebismethylcyclopentadienylhafniumdibromide, dimethylsilylenebismethylcyclopentadienylhafniumdimethyl, dimethyisilylenebismethylcyclopentadienylhafniumdiphenyl, phenylmethylsilylenebiscyclopentadienylhafniumdichloride, phenylmethylsilylenebiscyclopentadienylhafniumdibromide, phenylmethylsilylenebiscyclopentadienylhafniumdimethyl, phenylmethylsilylenebiscyclopentadienylhafniumdiphenyl, phenylmethylsilylenebismethylcyclopentadienylhafniumdichloride, phenylmethylsilylenebismethylcyclopentadienylhafniumdibromide, phenylmethylsilylenebismethylcyclopentadienylhafniumdimethyl, phenylmethylsilylenebismethylcyclopentadienylhafniumdiphenyl, diphenylsilylenebiscyclopentadienylhafniumdichloride, diphenylsilylenebiscyclopentadienylhafniumdibromide, diphenylsilylenebiscyclopentadienylhafniumdimethyl, diphenylsilylenebiscyclopentadienylhafniumdiphenyl, diphenylsilylenebismethylcyclopentadienylhafniumdichloride, diphenylsilylenebismethylcyclopentadienylhafniumdibromide, diphenylsilylenebismethylcyclopentadienylhafniumdimethyl, diphenylsilylenebismethylcyclopentadienylhafniumdiphenyl, disilylenebiscyclopentadienylhafniumdichloride, bisdimethylsilylenebiscyclopentadienylhafniumdichloride, ethylenebisindenyltitaniumdichloride, ethylenebisindenyltitaniumdibromide, ethylenebisindenyltitaniumdimethyl, ethylenebisindenyltitaniumdibenzyl, ethylenebisindenyltitaniumdihydride, ethylenebisindenyltitaniumhydridemethyl, ethylenebisindenyltitaniumhydridechloride, ethylenebisindenyltitaniumdihydridebenzyl, ethylenebisindenylzirconiumdichloride, ethylenebisindenylzicconiumdibromide, ethylenebisindenylzirconiumdimethyl, ethylenebisindenylzirconiumdibenzyl, ethylenebisindenylzirconiumdihydride, ethylenebisindenylzirconiumhydridemethyl, ethylenebisindenylzirconiumhydridechloride, ethylenebisindenylzirconiumhydridebenzyl, ethylenebisindenylhafniumdichloride, ethylenebisindenylhafniumdibromide, ethylenebisindenylhafniumdimethyl, ethylenebisindenylhafniumdibenzyl, ethylenebisindenylhafniumdihydride, ethylenebisindenylhafniumhydridemethyl, ethylenebisindenylhafniumhydridechloride, ethylenebisindenylhafniumhydridebenzyl, ethylenebistetrahydroindenyltitaniumdichloride, ethylenebistetrahydroindenyltitaniumdimethyl, ethylenebistetrahydroindenyltitaniumdihydride, ethylenebistetrahydroindenyltitaniumhydridechloride, ethylenebistetrahydroindenylzirconiumdichloride, ethylenebistetrahydroindenylzirconiumdimethyl, ethylenebistetrahydroindenylzirconiumdibenzyl, ethylenebistetrahydroindenylzirconiumdihydride, ethylenebistetrahydroindenylzirconiumhydridemethyl, ethylenebistetrahydroindenylzirconiumhydridechloride, ethylenebistetrahydroindenylzirconiumhydridebenzyl, ethylenebistetrahydroindenylhafniumdichloride, ethylenebistetrahydroindenylhafniumdimethyl, ethylenebistetrahydroindenylhafniumditolyl, ethylenebistetrahydroindenylhafniumdihydride, ethylenebistetrahydroindenylhafniumhydridechloride, dimethylsilylenebisindenyltitaniumdichloride, dimethylsilylenebisindenyltitaniumdimethyl, dimethylsilylenebisindenyltitaniumdibenzyl, dimethylsilylenebisindenyltitaniumdihydride, dimethylsilylenebisindenyltitaniumhydridechloride, diphenylsilylenebisindenyltitaniumdichloride, diphenylsilylenebisindenyltitaniumdimethyl, diphenylsilylenebisindenyltitaniumdibenzyl, diphenylsilylenebisindenyltitaniumdihydride, diphenylsilylenebisindenyltitaniumhydridechloride, isopropylidenebiscyclopentadienyltitaniumdichloride, isopropylidenebiscyclopentadienyltitaniumdimethyl, isopropylidenabiscyclopentadienyltitaniumdiphenyl, osopropylidenebiscyclopentadienyltitaniumdibenzyl, isopropylidenebiscyclopentadienyltitaniumdihydride, isopropylidenebiscyclopentadienyltitaniumhydridechloride, dimethylsilylenebisindenylzirconiumdichloride, dimethylsilylenebisindenylzirconiumdibromide, dimethylsilylenebisindenylzirconiumdimethyl, dimethylsilylenebisindenylzirconiumdiphenyl, dimethylsilylenebisindenylzirconiumdibenzyl, dimethylsilylenebisindenylzirconiumdineophyl, dimethylsilylenebisindenylzirconiumditolyl, dimethylsilylenebisindenylzirconiumdihydride, dimethylsilylenebisindenylzirconiumhydridemethyl, dimethylsilylenebisindenylzirconiumhydridechloride, dimethylsilylenebisindenylzirconiumhydridebenzyl, diphenylsilylenebisindenylzirconiumdichloride, diphenylsilylenebisindenylzirconiumdibromide, diphenylsilylenebisindenylzirconiumdimethyl, diphenylsilylenebisindenylzirconiumdiphenyl, diphenylsilylenebisindenylzirconiumdibenzyl, diphenylsilylenebisindenylzirconiumdineophyl, diphenylsilylenebisindenylzirconiumditolyl, diphenylsilylenebisindenylzirconiumdihydride, diphenylsilylenebisindenylzirconiumhydridemethyl, diphenylsilylenebisindenylzirconiumhydridechloride, diphenylsilylenebisindenylzirconiumhydridebenzyl, isopropylidenebiscyclopentadienylzirconiumdichloride, isopropylidenebincyclopentadienylzirconiumdibromide, isopropylidenebiscyclopentadienylzirconiumdimethyl, isopropylidenebiscyclopentadienylzirconiumdiphenyl, isopropylidenebiscyclopentadienylzirconiumdibenzyl, isopropylidenebiscyclopentadienylzirconiumdineophyl, isopropylidenebiscyclopentadienylzirconiumditolyl, isopropylidenebiscyclopentadienylzirconiumdihydride, isopropylidenebiscyclopentadienylzirconiumhydridemethyl, isopropylidenebiscyclopentadienylzirconiumhydridechloride, isopropylidenebiscyclopentadienylzirconiumhydridebenzyl, dimethylsilylenebisindenylhafniumdichloride, dimethylsilylenebisindenylhafniumdimethyl, dimethylsilylenebisindenylhafniumdibenzyl dimethylsilylenebisindenylhafniumdihydride, dimethylsilylenebisindenylhafniumhydridechloride, diphenylsilylenebisindenylhafniumdichloride, diphenylsilylenebisindenylhafniumdimethyl, diphenylsilylenebisindenylhafniumdibenzyl, diphenylsilylenebisindenylhafniumdihydride, diphenylsilylenebisindenylhafniumhydridechloride, isopropylidenebiscyclopentadienylhafniumdichloride, isopropylidenebiscyclopentadienylhafniumdimethyl, isopropylidenebiscyclopentadienylhafniumdibenzyl, isopropylidenebiscyclopentadienylhafniumdihydride, isopropylidenebiscyclopentadienylhafniumhydridechloride, bisfluorenyltitaniumdichloride, bisfluorenyltitaniumdimethyl, bisfluorenyltitaniumdihydride, bisfluorenylzirconiumdichloride, bisfluorenylzirconiumdibromide, bisfluorenylzirconiumdimethyl, bisfluorenylzirconiumdihydride, bisfluorenylzirconiumhydridemethyl, bisfluorenylzirconiumhydridechloride, bisfluorenylzirconiumhydridebenzyl, bisfluorenyldiphenylzirconium, bisfluorenyldibenzylzirconium, bisfluorenylhafniumdichloride, bisfluorenylhafniumdimethyl, bisfluorenylhafniumdihydride, diphenylmethylene(cyclopentadienyl)indenyltitaniumdichloride, diphenylmethylene(cyclopentadienyl)fluorenyltitaniumdichloride, diphenylmethylene(indenyl)fluorenyltitaniumdichloride, isopropylidene(cyclopentadienyl)indenyltitaniumdichloride, isopropylidene(cyclopentadienyl)fluorenyltitaniumdichloride, isopropylidene(indenyl)fluorenyltitaniumdichloride, ethylene(cyclopentadienyl)indenyltitaniumdichloride, ethylene(cyclopentadienyl)fluorenyltitaniumdichloride, dimethylsilylene(cyclopentadienyl) indenyltitaniumdichloride, dimethylsilylene(cyclopentadienyl)fluorenyltitaniumdichloride, dimethylsilylene(indenyl)fluorenyltitaniumdichloride, diphenylsilylene(cyclopentadienyl)indenyltitaniumdichloride, diphenylsilylene(cyclopentadienyl)fluorenyltitaniumdichloride, diphenylsilylene(indenyl)fluorenyltitaniumdichloride, diphenylmethylene(cyclopentadienyl)indenyltitaniumdimethyl, diphenylmethylene(cyclopentadienyl)fluorenyltitaniumdimethyl, diphenylmethylene(indenyl)fluorenyltitaniumdimethyl, isopropylidene(cyclopentadienyl)indenyltitaniumdimethyl, isopropylidene(cyclopentadienyl)fluorenyltitaniumdimethyl, isopropylidene(indenyl)fluorenyltitaniumdimethyl, ethylene(cyclopentadienyl)indenyltitaniumdimethyl, ethylene(cyclopentadienyl)fluorenyltitaniundimethyl, dimethylsilylene(cyclopentadienyl)indenyltitaniumdimethyl, dimethylsilylene(cyclopentadienyl)fluorenyltitaniumdimethyl, dimethylsilylene(indenyl)fluorenyltitaniumdimethyl, diphenylsilylene(cyclopentadienyl)indenyltitaniumdimethyl, diphenylsilylene(cyclopentadienyl)fluorenyltitaniumdimethyl, diphenylsilylene(indenyl)fluorenyltitaniumdimethyl, diphenylmethylene(cyclopentadienyl)indenylzirconiumdichloride, diphenylmethylene(cyclopentadienyl)fluorenylzirconiumdichloride, diphenylmethylene(indenyl)fluorenylzirconiumdichloride, isopropylidene(cyclopentadienyl)indenylzirconiumdichloride, isopropylidene(cyclopentadienyl)fluorenylzirconiumdichloride, isopropylidene(indenyl)fluorenylzirconiumdichloride, ethylene(cyclopentadienyl)indenylzirconiumdichloride, ethylene(cyclopentadienyl)fluorenylzirconiumdichloride, dimethylsilylene(cyclopentadienyl)indenylzirconiumdichloride, dimethylsilylene(cyclopentadienyl)fluorenylzirconiumdichloride, dimethylsilylene(indenyl)fluorenylzirconiumdichloride, diphenylsilylene(cyclopentadienyl)indenylzirconiumdichloride, diphenylsilylene(cyclopentadienyl)fluorenylzirconiumdichloride, diphenylsilylene(indenyl)fluorenylzirconiumdichloride, diphenylmethylene(cyclopentadienyl)indenylzirconiumdimethyl, diphenylmethylene (cyclopentadienyl)fluorenylzirconiumdimethyl, diphenylmethylene(indenyl)fluorenylzirconiumdimethyl, isopropylidene (cyclopentadienyl)indenylzirconiumdimethyl, isopropylidene(cyclopentadienyl)fluorenylzirconiumdimethyl, isopropylidene(indenyl)fluorenylzirconiumdimethyl, ethylene(cyclopentadienyl)indenylzirconiumdimethyl, ethylene(cyclopentadienyl)fluorenylzirconiumdimethyl, dimethylsilylene(cyclopentadienyl)indenylzirconiumdimethyl, dimethylsilylene(cyclopentadienyl)fluorenylzirconiumdimethyl, dimethylsilylene(indenyl)fluorenylzirconiumdimethyl, diphenylsilylene(cyclopentadienyl)indenylzirconiumdimethyl, diphenylsilylene(cyclopentadienyl)fluorenylzirconiumdimethyl, diphenylsilylene(indenyl)fluorenylzirconiumdimethyl, diphenylmethylene(cyclopentadienyl)indenylhafniumdichloride, diphenylmethylene (cyclopentadienyl)fluorenylhafniumdichloride, diphenylmethylene(indenyl)fluorenylhafniumdichloride, isopropylidene(cyclopentadienyl)indenylhafniumdichloride, isopropylidene(cyclopentadienyl)fluorenylhafniumdichloride, isopropylidene(indenyl)fluorenylhafniumdichloride, ethylene(cyclopentadienyl)indenylhafniumdichloride, ethylene(cyclopentadienyl)fluorenylhafniumdichloride, dimethylsilylene(cyclopentadienyl)indenylhafniumdichloride, dimethylsilylene(cyclopentadienyl)fluorenylhafniumdichloride, dimethylsilylene(indenyl)fluorenylhafniumdichloride, diphenylsilylene(cyclopentadienyl)indenylhafniumdichloride, diphenylsilylene(cyclopentadienyl)fluorenylhafniumdichloride, diphenylsilylene(indenyl)fluorenylhafniumdichloride, diphenylmethylene(cyclopentadienyl)indenylhafniumdimethyl, diphenylmethylene(cyclopentadienyl)fluorenylhafniumdimethyl, diphenylmethylene(indenyl)fluorenylhafniumdimethyl, isopropylidene(cyclopentadienyl)indenylhafniumdimethyl, isopropylidene(cyclopentadienyl)fluorenylhafniumdimethyl, isopropylidene(indenyl)fluorenylhafniumdimethyl, ethylene(cyclopentadienyl)indenylhafniumdimethyl, ethylene(cyclopentadienyl)fluorenylhafniumdimethyl, dimethylsilylene(cyclopentadienyl)indenylhafniumdimethyl, dimethylsilylene(cyclopentadienyl)fluorenylhafniumdimethyl, dimethylsilylene(indenyl)fluorenylhafniumdimethyl, diphenylsilylene(cyclopentadienyl)indenylhafniumdimethyl, diphenylsilylene(cyclopentadienyl)fluorenylhafniumdimethyl, diphenylsilylene(indenyl)fluorenylhafniumdimethyl, diphenylmethylene(methylcyclopentadienyl)indenylzirconiumdichloride, diphenylmethylene(methylcyclopentadienyl)fluorenylzirconiumdichloride, diphenylmethylene(methylindenyl)fluorenylzirconiumdichloride, isopropylidene(methylcyclopentadienyl)indenylzirconiumdichloride, isopropylidene(methylcyclopentadienyl)fluorenylzirconiumdichloride, isopropylidene(methylindenyl)fluorenylzirconiumdichloride, ethylene (methylcyclopentadienyl)indenylzirconiumdichloride, ethylene(methylcyclopentadienyl)fluorenylzirconiumdichloride, dimethylsilylene(methylcyclopentadienyl)indenylzirconiumdichloride, dimethylsilylene(methylcyclopentadienyl)fluorenylzirconiumdichloride, dimethylsilylene(methylindenyl)fluorenylzirconiumdichloride, diphenylsilylene(methylcyclopentadienyl)indenylzirconiumdichloride, diphenylsilylene(methylcyclopentadienyl)fluorenylzirconiumdichloride, diphenylsilylene(methylindenyl)fluorenylzirconiumdichloride, diphenylmethylene(methylcyclopentadienyl)indenylzirconiumdimethyl, diphenylmethylene(methylcyclopentadienyl)fluorenylzirconiumdimethyl, diphenylmethylene(methylindenyl)fluorenylzirconiumdimethyl, isopropylidene(methylcyclopentadienyl)indenylzirconiumdimethyL, isopropylidene(methylcyclopentadienyl)fluorenylzirconiumdimethyl, isopropylidene(methylindenyl)fluorenylzirconiumdimethyl, ethylene(methylcyclopentadienyl)indenylzirconiumdimethyl, ethylene(methylcyclopentadienyl)fluorenylzirconiumdimethyl, dimethylsilylene(methylcyclopentadienyl)indenylzirconiumdimethyl, dimethylsilylene(methylcyclopentadienyl)fluorenylzirconiumdimethyl, dimethylsilylene(methylindenyl)fluorenylzirconiumdimethyl, diphenylsilylene(methylcyclopentadienyl)indenylzirconiumdimethyl, diphenylsilylene(methylcyclopentadienyl)fluorenylzirconiumdimethyl, diphenylsilylene(methylindenyl)fluorenylzirconiumdimethyl, diphenylmethylene(dimethylcyclopentadienyl)indenylzirconiumdichloride, diphenylmethylene(dimethylcyclopentadienyl)fluorenylzirconiumdichloride, diphenylmethylene (dimethylindenyl)fluorenylzirconiumdichloride, isopropylidene(dimethylcyclopentadienyl)indenylzirconiumdichloride, isopropylidene(dimethylcyclopentadienyl)fluorenylzirconiumdichloride, isopropylidene(dimethylindenyl)fluorenylzirconiumdichloride, ethylene(dimethylcyclopentadienyl)indenylzirconiumdichloride, ethylene(dimethylcyclopentadienyl) fluorenylzirconiumdichloride, dimethylsilylene(dimethylcyclopentadienyl)indenylzirconiumdichloride, dimethylsilylene (dimethylcyclopentadienyl)fluorenylzirconiumdichloride, dimethylsilylene(dimethylindenyl)fluorenylzirconiumdichloride, diphenylsilylene(dimethylcyclopentadienyl)indenylzirconiumdichloride, diphenylsilylene(dimethylcyclopentadienyl)fluorenylzirconiumdichloride, diphenylsilylene(dimethylindenyl)fluorenylzirconiumdichloride, diphenylmethylene (dimethylcyclopentadienyl)indenylzirconiumdimethyl, diphenylmethylene(dimethylcyclopentadienyl)fluorenylzirconiumdimethyl, diphenylmethylene(dimethylindenyl)fluorenylzirconiumdimethyl, isopropylidene(dimethylcyclopentadienyl)indenylzirconiumdimethyl, isopropylidene(dimethylcyclopentadienyl)fluorenylzirconiumdimethyl, isopropylidene (dimethylindenyl)fluorenylzirconiumdimethyl, ethylene(dimethylcyclopentadienyl)indenylzirconiumdimethyl, ethylene (dimethylcyclopentadienyl)fluorenylzirconiumdimethyl, dimethylsilylene(dimethylcyclopentadienyl)indenylzirconiumdimethyl, dimethylsilylene(dimethylcyclopentadienyl)fluorenylzirconiumdimethyl, dimethylsilylene(dimethylindenyl)fluorenylzirconiumdimethyl, diphenylsilylene(dimethylcyclopentadienyl)indenylzirconiumdimethyl, diphenylsilylene (dimethylcyclopentadienyl)fluorenylzirconiumdimethyl, diphenylsilylene(dimethylindenyl)fluorenylzirconiumdimethyl, bis(cyclopentadienyl)methylidenetitanium, bis(methylcyclopentadienyl)methylidenetitanium, bis(indenyl)methylidenetitanium, ethylenebisindenylmethylidenetitanium, dimethylsilylenebiscyclopentadienylmethylidenetitanium, bis (cyclopentadienyl)propylidenetitanium, bis(methylcyclopentadienyl)propylidenetitanium, bis(indenyl)propylidenetitanium, ethylenebisindenylpropylidenetitanium, dimethylsilylenebiscyclopentadienylpropylidenetitanium, bis(cyclopentadienyl)methylidenezirconium, bis(methylcyclopentadienyl)methylidenezirconium, bis(indenyl)methylidenezirconium, ethylenebisindenylmethylidenezirconium, dimethylsilylenebiscyclopentadienylmethylidenezirconium, bis(cyclopentadienyl)propylidenezirconium, bis(methylcyclopentadienyl)propylidenezirconium, bis(indenyl)propylidenezirconium, ethylenebisindenylpropylidenezirconium, dimethylsilylenebiscyclopentadienylpropylidenezirconium, bis(cyclopentadienyl)methylidenehafnium, bis(methylcyclopentadienyl)methylidenehafnium, bis(indenyl)methylidenehafnium, ethylenebisindenylmethylidenehafnium, dimethylsilylenebiscyclopentadienylmethylidenehafnium, bis(cyclopentadienyl) propylidenehafnium, bis(methylcyclopentadienyl)propylidenehafnium, bis(indenyl)propylidenehafnium, ethylenebisindenylpropylidenehafnium and dimethylsilylenebiscyclopentadienylpropylidenehafnium.

Preferred among these compounds are bisindenyldimethylzirconium, bisindenyldiphenylzirconium, bisindenyldichlorozirconium, bisindenyldibenzylzirconium, bisfluorenyldimethylzirconium, bisfluorenyldiphenylzirconium, bisfluorenyldichlorozirconium, bisfluorenyldibenzylzirconium, biscyclopentadienyldimethylzirconium, biscyclopentadienyldiphenylzirconium, biscyclopentadienyldichlorozirconium and biscyclopentadienyldibenzylzirconium.

Two or more of the above compounds may be used in combination.

In the preparation of the inventive catalyst component, the metallocen compound (a) represented by formula I may be used in combination with more than one of the following components.

(b) a compound represented by the formula

$$Me^2R^2_m(OR^3)_nX^2z\text{-}m\text{-}n \qquad II$$

(c) an organocyclic compound having two or more conjugated double bonds
(d) an inorganic and/or particulate polymer carrier.

$Me^2$ in the formula II is an element of Groups I - III, preferably Groups II - III in the Periodic Table, specifically is selected from the group consisting of lithium, sodium, potassium, magenesium, calcium, zinc and aluminum.

$R^2$ and $R^3$ each are $C_1$-$C_{24}$, preferably $C_1$-$C_{12}$, more preferably $C_1$-$C_8$ straight or branched hydrocarbon groups including an alkyl group such as methyl group, ethyl group, propyl group, isopropyl group,cyclopropyl group, butyl group, isobutyl group, tert-butyl group, cyclobutyl group, pentyl group, isopentyl group, neopentyl group, cyclopentyl group, hexyl group, isohexyl group, cyclohexyl group, heptyl group and octyl group; an alkenyl group such as vinyl group and allyl group; an aryl group such as phenyl group, tolyl group, xylyl group, mesityl group, indenyl group and naphthyl group and an aralkyl group such as benzyl group, trityl group, phenethyl group, styryl group, benzhydryl group, phenylbutyl group, phenylpropyl group and neophyl group.

$X^2$ is a halogen atom such as fluorine, iodine, chlorine and bromine or a hydrogen atom. Provided that $X^2$ is an hydrogen atom, $Me^2$ is an element of Group III in the Periodic Table.

z is a valence of $Me^2$, m and n are $0 \leq m \leq z$, $0 \leq n \leq z$ and $0 < m+n \leq z$.

The component (b) exemplarily and specifically includes methyllithium, ethyllithium, n-propyllithium, isopropyllithium, n-butyllithium, t-butyllithium, pentyllithium, octyllithium, phenyllithium, benzyllithium, dimethylmagnesium, diethylmagnesium, din-propylmagnesium, diisopropylmagnesium, din-butylmagnesium, dit-butylmagnesium, dipentylmagnesium, dioctylmagnesium, diphenylmagnesium, dibenzylmagnesium, methylmagnesiumchloride, ethylmagnesiumchloride, n-propylmagnesiumchloride, isopropylmagnesiumchloride, n-butylmagnesiumchloride, t-butylmagnesiumchloride, pentylmagnesiumchloride, octylmagnesiumchloride, phenylmagnesiumchloride, benzylmagnesiumchloride, methylmagnesiumbromide, methylmagnesiumiodide, ethylmagnesiumbromide, ethylmagnesiumiodide, n-propylmagnesiumbromide, n-propylmagnesiumiodide, isopropylmagnesiumbromide, isopropylmagnesiumiodide, n-butylmagnesiumbromide, n-butylmagnesiumiodide, t-butylmagnesiumbromide, t-butylmagnesiumiodide, pentylmagnesiumbromide, pentylmagnesiumiodide, octylmagnesiumbromide, octylmagnesiumiodide, phenylmagnesiumbromide, phenylmagnesiumiodide, benzylmagnesiumbromide, benzylmagnesiumiodide, dimethylzinc, diethylzinc, din-propylzinc, diisopropylzinc, din-butylzinc, dit-butylzinc, dipentylzinc, dioctylzinc, diphenylzinc, dibenzylzinc, trimethylaluminium, triethylaluminium, diethylaluminiumhydride, diethylaluminiumchloride, diethylaluminiumbromide, diethylaluminiumfluoride, diethylaluminiumiodide, ethylaluminiumdichloride, ethylaluminiumdibromide, ethylaluminiumdifluoride, ethylaluminiumdiiodide, tripropylaluminium, dipropylaluminiumhydride, dipropylaluminiumchloride, dipropylaluminiumbromide, dipropylaluminiumfluoride, dipropylaluminiumiodide, diisobutylaluminiumhydride, propylaluminiumdichloride, propylaluminiumdibromide,propylaluminiumdifluoride, propylaluminiumdiiodide, triisopropylaluminium, diisopropylaluminiumchloride, diisopropylaluminiumbromide, diisopropylaluminiumfluoride, diisopropylaluminiumiodide, ethylaluminiumsesquichloride, ethylaluminiumsesquibromide, propylaluminiumsesquichloride, propylaluminiumsesquibromide, n-butylaluminiumsesquichloride, n-butylaluminiumsesquibromide, isopropylaluminiumdichloride, isopropylaluminiumdibromide, isopropylaluminiumdifluoride, isopropylaluminiumdiiodide, tributylaluminium, dibutylaluminiumchloride, dibutylaluminiumbromide, dibutylaluminiumfluoride, dibutylaluminiumiodide, butylaluminiumdichloride, butylaluminiumdibromide, butylaluminiumdifluoride, butylaluminiumdiiodide, tri-sec-butylaluminium, di-sec-butylaluminiumchloride, di-sec-butylaluminiumbromide, di-sec-butylaluminiumfluoride, di-sec-butylaluminiumiodide, sec-butylaluminiumdichloride, sec-butylaluminiumdibromide, sec-butylaluminiumdifluoride, sec-butylaluminiumdiiodide, tri-tert-butylaluminium, di-tert-butylaluminiumchloride, di-tert-butylaluminiumbromide, di-tert-butylaluminiumfluoride, di-tert-butylaluminiumiodide, tert-butylaluminimdichloride, tert-butylaluminiumdibromide, tert-butylaluminiumdifluoride, tert-butylaluminiumdiiodide, triisobutylaluminium, diisobutylaluminiumchloride, diisobutylaluminiumbromide, diisobutylaluminiumfluoride, diisobutylaluminiumiodide, isobutylaluminiumdichloride, isobutylaluminiumdibromide, isobutylaluminiumdifluoride, isobutylaluminiumdiiodide, trihexylaluminium, dihexylaluminiumchloride, dihexylaluminiumbromide, dihexylaluminiumfluoride, dihexylaluminiumiodide, hexylaluminiumdichloride, hexylaluminiumdibromide, hexylaluminiumdifluoride, hexylaluminiumdiiodide, tripentylaluminium, dipentylaluminiumchloride, dipentylaluminiumbromide, dipentylaluminiumfluoride, dipentylaluminiumiodide, pentylaluminiumdichloride, pentylaluminiumdibromide, pentylaluminiumdifluoride, pentylaluminiumdiiodide, tridecylaluminium, methylaluminiumdimethoxide, methylaluminimdiethoxide, methylaluminiumdipropoxide, methylaluminiumdibutoxide, dimethylaluminiummethoxide, dimethylaluminiumethoxide, dimethylaluminiumpropoxide, dimethylaluminiumbutoxide, ethylaluminiumdimethoxide, ethylaluminiumdiethoxide, ethylaluminiumdipropoxide, methylaluminiumdibutoxide, diethylaluminiummethoxide,diethylaluminiumethoxide, diethylaluminiumpropoxide, diethylaluminiumbutoxide, propylaluminiumdimethoxide, propylaluminiumdiethoxide, propylaluminiumdipropoxide, mpropylaluminiumdibutoxide, dipropylaluminiummethoxide, dipropylaluminiumethoxide, dipropylaluminiumpropoxide, dipropylaluminiumbutoxide, butylaluminiumdimethoxide, butylaluminiumdiethoxide, butylaluminiumdipropoxide, butylaluminiumdibutoxide, dibutylaluminiummethoxide, dibutylaluminiumethoxide, dibutylaluminiumpropoxide, dibutylaluminiumbutoxide, dimethylaluminiumhydride, diethylaluminiumhydride, dipropylaluminiumhydride, diisopropylaluminiumhydride, dibutylaluminiumhydride, diisobutylaluminiumhydride, dihexylaluminiumhydride, dicyclohexylaluminiumhydride, methylaluminiumdihydride, ethylaluminiumdihydride,propylaluminiumdihydride, isopropylaluminiumdihydride, butylaluminiumdihydride, isobutylaluminiumdihydride, hexylaluminiumdihydride and cyclohexylaluminiumdihydride.

Two or more of the above compounds may be used in combination. Preferred among the above compound (b) are trimethylaluminium, triethylaluminium, diethylaluminiumchloride, tripropylaluminium,triisopropylaluminium, tributylaluminium, tri-sec-butylaluminium, tri-tert-butylaluminium, triisobutylaluminium, trihexylaluminium, tripentylaluminium, diisobutylaluminiumhydride and tridecylaluminium.

The compound (c) is an organocyclic compound having more than two conjugated double-bonds. Eligible for use as the compound (c) are as follows:

1) a cyclic hydrocarbon compound having one or more rings having more than two, preferably two to four, more preferably two to three conjugated double-bonds and a total carbon number of 4 - 24, preferably 4 - 12.
2) a cyclic hydrocarbon compound similar to the aforesaid hydrocarbon compound which is partially substituted by one to six hydrocarbon groups, typically $C_1$-$C_{12}$ alkyl or aralkyl groups.
3) an organosilicone compound having one or more rings having more than two, preferably two to four, more preferably two to three conjugated double-bonds and a cyclic hydrocarbon group having a total carbon number of 4 - 24, preferably 4 - 12.
4) an organosilicone compound obtained by partially substituting the hydrogens of the aforesaid compound 3) by one to six hydrocarbons.
5) alkaline metal salts (sodium and lithium salts) of each of the aforesaid compounds.

One of the preferred cyclic hydrocarbon compounds may represented by the formula

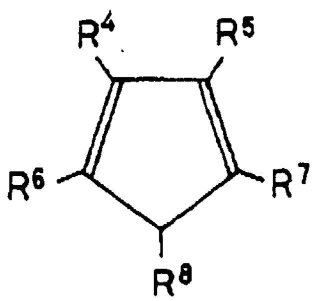

..... III

where $R^4$, $R^5$, $R^6$, $R^7$ and $R^8$ each are hydrogen or a $C_1$-$C_{10}$ hydrocarbon group, any of these hydrocarbon groups jointly forming a cyclic hydrocarbon group. The $C_1$-$C_{10}$ hydrocarbon groups include each an alkyl group such as methyl, ethyl, propyl, isopropyl, butyl, t-butyl, hexyl and octyl; an aryl group such as phenyl; an alkoxy group such as methoxy, ethoxy and propoxy; an aryloxy group such as phenoxy; and an aralkyl group such as benzyl.

In the case where any two of the hydrocarbon groups of formula III jointly form the cyclic hydrocarbon group, the skelton thereof includes cycloheptatriene, aryl and their condensed rings.

Preferred compounds of formula III are cyclopentadiene, indene, azulene and their derivatives substituted by a $C_1$-$C_{10}$ alkyl, aryl, aralkyl, alkoxy or aryloxy group.

The organosilicone compound having a cyclic hydrocarbon group may be represented by the formula

$$(Cp)_r SiR^9_s X^3_{4-r-s} \qquad IV$$

where Cp is a cyclic hydrocarbon group such as cyclopentadienyl, substituted-cyclopentadienyl, indenyl and substituted-indenyl.

$R^9$ is hydrogen or a $C_1$-$C_{24}$, preferably $C_1$-$C_{12}$ hydrocarbon residue including an alkyl group such as methyl, ethyl, propyl, isopropyl, butyl, t-butyl, pentyl, hexyl and octyl; an alkenyl group such as vinyl and allyl; an alkoxy group such as methoxy, ethoxy, propoxy and butoxy; an aryl group such as phenyl, tolyl and xylyl; an aryloxy group such as

phenoxy; and an aralkyl group such as benzyl, phenetyl, styryl and neophyl; $R^9$ further including n-, iso-, s-, t-and neo-isomeric groups.

$x^3$ is a halogen atom such as fluorine, iodine, chlorine and bromine; r and s are $0 < r \leq 4$, $0 \leq s \leq 3$, preferably $1 \leq r+s \leq 4$.

Eligible organocyclic hydrocarbon compounds for use as the compound (c) include cyclopolyene or substituted-cyclopolyene of 7 - 24 carbon atoms such as cyclopentadiene, substituted-cyclopentadiene such as methylcyclopentadiene, ethylcyclopentadiene, propylcyclopentadiene, isopropylcyclopentadiene, butylcyclopentadiene, isobutylcyclopentadiene, sec-butylcyclopentadiene,ü@ t-butylcyclopentadiene, hexylcyclopentadiene, octylcyclopentadiene, 1,2-dimethylcyclopentadiene, 1,3-dimethylcyclopentadiene, 1-methyl-3-propylcyclopentadiene, 1-ethyl-3-methylcyclopentadiene, 1-ethyl-3-propylcyclopentadiene, 1-propyl-3-methylcyclopentadiene, 2-ethyl-5-isopropylcyclopentadiene, 2-methyl-5-phenylcyclopentadiene, 2-ethyl-3,5-dimethylcyclopentadiene, 1,2,4-trimethylcyclopentadiene and 1,2,3,4-tetramethylcyclopentadiene; indene, substituted-indene such as 4-methyl-1-indene, 4,7-dimethylindene and 4,5,6,7-tetrahydroindene; cycloheptatriene, substituted-cycloheptatriene such as methylcycloheptatriene; cyclooctatetraene, substituted-cyclooctatetraene such as methylcyclooctatetraene, fluorene, azulene and substituted-azulene such as methylazulene and ethylazulene; and fluorene and substituted-fluorene such as methylfluorene; and further include monocyclopentadienylsilan, dicyclopentadienylsilan, tricyclopentadienylsilan, tetracyclopentadienylsilan, monocyclopentadienylmonomethylsilan, monocyclopentadienylmonoethylsilan, monocyclopentadienyldimethylsilan, monocyclopentadienyldiethylsilan, monocyclopentadienyltrimethylsilan, monocyclopentadienyltriethylsilan, monocyclopentadienylmonomethoxysilan, monocyclopentadienylmonoethoxysilan, monocyclopentadienylmonophenoxysilan, monocyclopentadienylmononethylmonochlorosilan, monocyclopentadienylmonoethylmonochlorosilan, monocyclopentadienylmonomethyldichlorosilan, monocyclopentadienylmonoethyldichlorosilan, monocyclopentadienyltrichlorosilan, dicyclopentadienylmonomethylsilan, dicyclopentadienylmonoethylsilan, dicyclopentadienyldimethylsilan, dicyclopentadienyldiethylsilan, dicyclopentadienylmethylethylsilan, dicyclopentadienyldipropylsilan, dicyclopentadienylethylpropylsilan, dicyclopentadienyldiphenylsilan, dicyclopentadienylphenylmethylsilan, dicyclopentadienylmethylchlorosilan, dicyclopentadienylethylchlorosilan, dicyclopentadienyldichlorosilan, dicyclopentadienylmonomethoxysilan, dicyclopentadienylmonoethoxysilan, dicyclopentadienylmonomethoxymonochlorosilan, dicyclopentadienylmonoethoxymonochlorosilan, tricyclopentadienylmonomethylsilan, tricyclopentadienylmonoethylsilan, tricyclopentadienylmonomethoxysilan, tricyclopentadienylmonoethoxysilan, tricyclopentadienylmonochlorosilan, 3-methylcyclopentadienylsilan, bis-3-methylcyclopentadienylsilan, 3-methylcyclopentadienylmethylsilan, 1,2-dimethylcyclopentadienylsilan, 1,3-dimethylcyclopentadienylsilan, 1,2,4-trimethylcyclopentadienylsilan, monoindenylsilan, diindenylsilan, triindenylsilan, tetraindenylsilan, monoindenylmonomethylsilan, monoindenylmonoethylsilan, monoindenyldimethylsilan,monoindenyldiethylsilan, monoindenyltrimethylsilan, monoindenyltriethylsilan, monoindenylmonomethoxysilan, monoindenylmonoethoxysilan, monoindenylmonophenoxysilan, monoindenylmonomethylmonochlorosilan, monoindenylmonoethylmonochlorosilan, monoindenylmonomethyldichlorosilan, monoindenylmonoethyldichlorosilan, monoindenyltrichlorosilan, diindenylmonomethylsilan, diindenylmonoethylsilan, diindenyldimethylsilan, diindenyldiethylsilan, diindenylmethylethylsilan, diindenyldipropylsilan, diindenylethylpropylsilan, diindenyldiphenylsilan, diindenylphenylmethylsilan, diindenylmethylchlorosilan, diindenylethylchlorosilan, diindenyldichlorosilan, diindenylmonomethoxysilan, diindenylmonoethoxysilan, diindenylmonomethoxymonochlorosilan, diindenylmonoethoxymonochlorosilan, triindenylmonomethylsilan, triindenylmonoethylsilan, triindenylmonomethoxysilan, triindenylmonoethoxysilan, triindenylmonochlorosilan, 3-methylindenylsilan, bis-3-methylindenylsilan, 3-methylindenylmethylsilan, 1,2-dimethylindenylsilan, 1,3-dimethylindenylsilan, 1,2,4-trimethylindenylsilan and pentamethylindenylsilan. Preferred are cyclopentadiene, a substituted cyclopentadiene, indene and a substituted indene.

There are also eligible these compounds bonded through alkylene groups of usually 2 - 8, preferably 2 - 3 carbon atoms, silylene groups or silylene groups substituted by an alkyl group of usually 2 - 8, preferably 2 - 3 carbon atoms. Such compounds exemplarily include ethylenebiscyclopentadiene, ethylenebispropylcyclopentadiene, ethylenebisbutylcyclopentadiene, isopropylidenebiscyclopentadiene, isopropylidenebispropylcyclopentadiene, isopropylidenebisbutylcyclopentadiene, bisindenylethane, bis(4,5,6,7-tetrahydra-1-indenyl)ethane, 1,3-propanedienylbisindene, 1,3-propanedienylbis(4,5,6,7 -tetrahydro)indene, isopyrenebis(1-indene), isopyrene(1-indenyl)cyclopentadiene, diphenylmethylenebisindene, diphenylmethylene(9-fluorenyl)cyclopentadiene, isopropylenecyclopentadienyl-1-fluorene, dimethylsilylenebiscyclopentadiene, dimethylsilylenebisindene, dimethylsilylenebispropylcyclopentadiene, dimethylsilylenebisbutylcyclopentadiene, diphenylsilylenebiscyclopentadiene, diphenylsilylenebisindene, diphenylsilylenebispropylcyclopentadiene and diphenylsilylenebisbutylcyclopentadiene.

The compound (d) is an inorganic and/or particulate polymer carriers. The inorganiccarrier may be intrinsically in the form of powder, granule, flake, foil or fiber, but whastever the shape may be, it should be 5 - 200 μm, preferably 10 - 100 μm in maximum length. The inorganic carrier is preferably porous, having a surface area of 50 - 1,000 $m^2/g$ and a pore volume of 0.05 - 3 $cm^3$. It may be chosen from the group of a carbonaceous material, a metal, a metal oxide, a metal chloride and a metal carbonate, or a mixture thereof, which is calcined usually at 200°C - 900°C in the air , or an inert gas such as nitrogen, or argon. Suitable metals for the inorganic carrier are iron, aluminum and nickel.

Eligible metal oxides are Group I - VIII metal oxides of the Periodic Table including $SiO_2$, $Al_2O_3$, MgO, CaO, $B_2O_3$, $TiO_2$, $ZrO_2$, $Fe_2O_3$, $SiO_2 \cdot Al_2O_3$, $Al_2O_3 \cdot MgO$, $Al_2O_3 \cdot CaO$, $Al_2O_3 \cdot MgO \cdot CaO$, $Al_2O_3 \cdot MgO \cdot SiO_2$, $Al_2O_3 \cdot CuO$, $Al_2O_3 \cdot Fe_2O_3$, $Al_2O_3 \cdot NiO$ and $SiO_2 \cdot MgO$. The double oxides are not particularly restricted in terms of structure and component ratio when used in the invention. The metal oxides may have adsorbed thereto small quantities of moisture and may further contain a small amount of impurities.

The metal chloride used in the invention is a chloride of an alkaline metal or alkaline earth metal, preferably $Mgcl_2$ and $CaCl_2$. Examples of the metal carbonate are magnesium carbonate, calcium carbonate and barium carbonate, while those of the carbonaceous material referred to herein are carbonblack and activated carbon. The above metal oxides are most preferred amongst the other inorganic carrier materials.

Preferred are the metal oxide, silica and alumina.

The term particulate polymer as used herein as a catalyst support or carrier designates a solid particulate form of either thermoplastic or thermosetting resin having an average particle size 5 - 2,000 μm, preferably 10 - 100 μm, practically ranging from low molecular weight to ultra high molecular weight polymers as long as these polymers remain solid during the stages of catalyst preparation and polymerization reaction. The starting polymer suitably has a molecular weight in the range of between 1,000 and 3,000,000 dependent upon the type chosen. Specific examples of the particulate polymer include polyolefins preferably of 2 - 12 carbon atoms such as particulate ethylene polymers, ethylene alpha-olefin copolymers, propylene polymers or copolymers, poly-1-buten or the like, polyester, polyamide, polyvinylchloride, polymethylmethacrylate, polymethylacrylate, polystyrene, polynorbornen and naturally occurring polymers as well as mixtures thereof.

The foregoing inorganic and particulate polymer carriers may be used per se as Component (D) according to the invention. Alternatively, they may be pretreated with an organoaluminum compound such as trimethylaluminum, triethylaluminum, triisobutylaluminum, tri-n-hexylaluminum, dimethylaluminumchloride, diethylaluminumchloride, diethylmonoethoxyaluminum, triethoxyaluminum or the like, a modified organoaluminum compound having Al-O-Al bonds, or a silane compound. Eligible for pretreatment of the inorganic carrier are an active hydrogen-containing compound such as alcohol and aldehydes, an electron-donative compound such as ester and ether, or an alcoxide-containing compound such as tetraalcoxysilicate, tetraalcoxyaluminum and transition-metal tetraalcoxide.

The carriers may be contacted with various pretreating compounds in an atmosphere of an inert gas such as nitrogen or argon in the presence of an inert liquid hydrocarbon such as an aromatic hydrocarbon (6 - 12 carbon atoms) including benzene, toluene, xylene and ethylbenzene or an aliphatic or alicyclic hydrocarbon (5 - 12 carbon atoms) including pentane, hexane, heptane, octane, decane, dodecane and cyclohexane, with or without stirring at a temperature of -100° - 200°C, preferably -50° - 100°C for 30 minutes to 50 hours, preferably 1 - 24 hours. This pretreatement reaction is carried out preferably in the presence of a solvent of an aromatic hydrocarbon such as benzene, toluene, xylene and ethylbenzene in which the pretreating compounds are renderad soluble. The resulting carrier may be readily put to use for the preparation of catalyst components without having to remove the solvent. If the pretreating compound, for example a modified organoaluminum compound, is insoluble or hardly soluble, there may be added pentane, hexane, heptane, octane, decane, dodecane or cyclohexane to allow the reaction product to precipitate and thereafter dry. Alternatively, part or all of the aromatic hydrocabon solvent may be removed as by means of drying.

The amount of the pretreating compound is usually 0.01 - 10,000 millimoles, preferably 0.1 - 100 millimoles (or Al atom concentration in the case of a modified aluminum compound) per gram of the carrier.

The metallocene compound of formula I, when analyzed in solution by 1H-NMR, usually presents a hydrogen peak at the 5-member ring in the cyclopentadienyl, indenyl or fluorenyl structure. It has now been found that the metallocene compound may be modified to ensure freedom of such hydrogen peaks in accordance with an important feature of the invention. For the sake of convenience, a metallocene compound having a hydrogen peak is hereinafter referred to as "unmodified metallocene", while a metallocene compound having no hydrogen peak is designated as "modified metallocene". A metallocene compound of formula I, which retains the status of "modified metallocene" when used as a catalyst component or as a catalyst composition made up of one or more such catalyst is hereinafter designated as catalyst component (A).

The inventive catalyst component (A) Or catalyst is prepared by the following procedures which should not be regarded as limiting the scope of the invention.

1) A metallocene compound dissolved in a solution of an aromatic hydrocarbon such as toluene, xylene and mesitylene is added with compounds (b) and (c) and stirred at a temperature of 0° - 300°C, preferably 30° - 250°C, more preferably 60° - 200°C, most preferably 100° - 170°C for 5 minutes - 150 hours, preferably 10 minutes - 50 hours, more preferably 30 minutes - 10 hours.

2) A metallocene compound dissolved in a solution of an aromatic hydrocarbon such as toluene, xylene and mesitylene is added with Component (B) (hereafter described) and stirred at room temperature for 1 - 10,000 hours, preferably 5 - 1,000 hours, more preferably 12 - 500 hours, still more preferably 50 - 300 hours and most preferably 100 - 300 hours.

3) A metallocene compound dissolved in a solution of an aromatic hydrocarbon such as toluene, xylene and mesitylene is added with compounds (b) and (c) and stirred at a temperature of 0° - 300°C, preferably 30° - 250°C, more preferably 60° - 200°C, most preferably 100° - 170°C for 5 minutes - 150 hours, preferably 10 minutes - 50 hours and more preferably 30 minutes - 10 hours, followed by addition of Components (B) and (C) (hereinafter described) and stirred at room temperature for 1 minute - 10,000 hours, preferably 2 minutes - 1,000 hours, more preferably 10 minutes - 500 hours, still more preferably 50 - 300 hours and most preferably 100 - 300 hours.
4) A metallocene compound dissolved in a solution of an aromatic hydrocarbon such as toluene, xylene and mesitylene is added with Component (B) and stirred at a temperature of 0° - 300°C, preferably 30° - 250°C, more preferably 60° - 200°C, most preferably 100° - 170°C for 5 minutes - 150 hours, preferably 10 minutes - 50 hours, more preferably 30 minutes - 10 hours.

1H-NMR analysis reveals that unmodified metallocenes such as titanocene, zirconocene and hafnocene have such cyclopentadienyl, indenyl and fluorenyl groups whose 5-member rings present peaks of hydrogen in the chemical shift δ ranging from 4ppm to 7ppm. Such unmodified metallocene compounds are typically olefinic hydrocarbons. It has now been found that the modified metallocene compound can be free of hydrogen peaks at the 5-member ring by removing coexistent olefins along with the solvent in vacuum as evidenced by 1H-NMR analysis made of a sample upon replenishment of the solvent, when no hydrogen peaks appeared in the range of 4 ppm - 7 ppm.

The inventive catalyst is prepared by mutual contact of the metallocene compound of formula I with Components (B) and/or (C) and further addtionally with at least one of the aforesaid compounds (b) through (d). The metallocene compound of formula I may be "unmodified metallocene compound" prior to or after contact with these components. However, it is important to ensure that the metallocene compound according to the invention is invariably "modified metallocene compound" at the stage of application to the polymerization reaction.

Component (B) is a modified organoaluminum compound having Al-O-Al bonds resulting from the reaction of an organoaluminum compound with water. It has in its molecule an Al-O-Al bond numbering from 1 to 100, preferably from 1 to 50. The reaction is effected usually in the presence of an inert hydrocarbon, typically an aliphatic hydrocarbon such as pentane, hexane, heptane or the like, an alicyclic hydrocarbon such as cyclohexane, methylcyclohexane or the like, or an aromatic hydrocarbon such as benzene, toluene, xylene or the like. Particularly preferred are the aliphatic and aromatic hydrocarbons.

The starting organoaluminum compound may be represented by the formula

$$R^{10}{}_{c}AlX^{4}{}_{3-c} \qquad V$$

where $R^{10}$ is a hydrocarbon group such as alkyl, alkenyl, aryl and aralkyl group of 1 to 18, preferably 1 to 12 carbon atoms; $X^4$ is a halogen or hydrogen atom; and c is an integer of $1 \le c \le 3$. Trialkylaluminums are preferred in which the alkyl group is a methyl, ethyl, propyl, isopropyl, butyl, isobutyl, pentyl, hexyl, octyl, decyl or dodecyl group among which the methyl group is most preferred.

The water/organoaluminum reaction takes place in a molar ratio of water:Al in the range of 0.25:1 to 1.2:1, preferably 0.5:1 to 1:1 at a temperature of usually -70°C to 100°c, preferably -20°C to 20°C for a period of 5 to 24 hours, preferably 5 to 10 hours. As water for reaction with the organoaluminum compound, there may be used a water of crystallization contained in a hydrate such as copper sulfate hydrate, aluminum sulfate hydrate or the like. It has been found that methylaluminoxane, reaction product of an alkylaluminum and water, is particularly suitable source as Component B. Any of the above modified organoaluminum compounds may be used in combination.

Component (C) includes borate of the first class which is represented by the formula

$$[L^{1}\text{-}H]^{+}[BR^{11}R^{12}X^{5}X^{6}]^{-} \qquad VI$$

where $L^1$ is a neutral Lewis base, H is a hydrogen atom, $[L^1\text{-}H]$ is Bronsted acid such as ammonium, anilinium and phosphonium.

The ammonium here designates trialkyl-substituted ammonium such as trimethylammonium, triethylammonium, tripropylammonium, tributylammonium and tri(n-butyl)ammonium and dialkylammonium such as di(n-propyl)ammonium and dicyclohexylamnonium.

The anilinium includes N,N-dialkylanilinium such as N,N-dimethylanilinium, N,N-diethylanilinium and N,N-2,4,6-pentamethylanilinium.

The phosphonium includes triarylphosphonium such as triphenylphosphonium, tributylphosphonium, tri(methylphenyl)phosphonium and tri(dimethylphenyl)phosphonium and trialkylphosphonium.

$R^{11}$ and $R^{12}$ in formula VI each are an aromatic hydrocarbon group or substituted-aromatic hydrocarbon group or substituted-aromatic hydrocarbon group of $C_6$-$C_{20}$, preferably $C_6$-$C_{16}$ which may be cross-linked to one another. Preferred substituents of the aromatic hydrocarbon groups are an alkyl group such as methyl, ethyl, propyl and isopropyl and a halogen such as fluorine, chlorine, bromine and iodine.

$X^5$ and $X^6$ in formula VI each are hydrogen groups, halogen groups, $C_1$-$C_{20}$ hydrocarbyl groups and $C_1$-$C_{20}$ substituted-hydrocarbyl groups having more than one hydrogen atom substituted by halogen atom.

Borate of the second class is represented by the formula

$$[L^2\text{-H}][(CX^7)_a(BX^8)_bX^9{}_c]^{d-} \qquad \text{VII}$$

where $[L^2\text{-H}]$ is hydrogen ion, an ammonium cation substituted by a $C_1$-$C_{20}$ hydrocarbyl group having ammonium or less than three hydrogen atoms or by a $C_1$-$C_{20}$ substituted-hydrocarbyl group having more than one hydrogen atom substituted by halogen atom, a phosphonium group or a phosphonium group substituted by a $C_1$-$C_{20}$ substituted-hydrocarbyl group having less than three hydrogen atoms substituted by a $C_1$-$C_{20}$ hydrocarbyl group or having more than one hydrogen atom substituted by halogen atom.

The symbols B and C are boron and carbon respectively.

$X^7$, $X^8$ and $X^9$ in the formula VII each are a hydride, halide, a $C_1$-$C_{20}$ hydrocarbyl group, a $C_1$-$C_{20}$ hydrocarbyl group having more than one hydrogen atom substituted by halogen atom or an organo-metalloid of Groups IV-A in the Periodic Table having in its organo portion a $C_1$-$C_{20}$ hydrocarbyl group.

The symbols a and c each are an integer greater than 0; d is an integer greater than 1; a+c+d is an even number integer usually of from 2 to 8; and b is an integer usually of from 5 to 22.

Borate of the third class is represented by the formula

$$[L^2\text{-H}]\{[<(CX^{10})_e(BX^{11})_f(X^{12})_g>^{h-}]_2M^{n+}\}^{i-} \qquad \text{VIII}$$

where $[L^2\text{-H}]$, $X^{10}$, $X^{11}$, $X^{12}$, B and C are the same as defined in formula VII; M and H are a transitional metal and hydrogen, respectively; e and g each are the same or different integer greater than 0; h is an integer greater than 2; e+g+h is an even-number integer usually of from 4 to 8; n is an integer corresponding to 2h-n=i; and i is an integer greater than one.

Borate of the forth class is represented by the formula

$$[L^3]^+[BR^{11}R^{12}X^5X^6]^- \qquad \text{VIV}$$

where $L^3$ is a carbocation, methylcation, ethylcation, propylcation, isopropylcation, butylcation, isobutylcation, tert-butylcation, pentylcation, tropyliumcation, benzylcation and tritylcation and $R^{11}$, $R^{12}$, $X^5$ and $X^6$ each are the same as defined in formula VI.

Borate of the fifth class is represented by the formula

$$[R^2M]^+[BR^{11}R^{12}X^5X^6]^- \qquad \text{X}$$

where R is a cyclopentadienyl group, substituted-cyclopentadienyl group, indenyl group and substituted indenyl group and X is Cr, Mn, Fe, Co, Ni and like transition metal.

Borate of the sixth class is represented by the formula

$$[L^3]^+[(CX^7)_a(BX^8)_bX^9{}_c]^{d-} \qquad \text{XI}$$

where $L^3$ is the same as defined in formula VIV and C, $X^7$ $X^8$, $X^9$, a, b, c and d each are the same as defined in formula VII.

Borate of the seventh class is represented by the formula

$$[R^2M]+[(CX^7)_a(BX^8)_bX^9{}_c]^{d-} \qquad \text{XII}$$

where R and M each are the same as defined in formula X and as C, $X^7$, $X^8$, $X^9$, a, b, c and d each are the same as defined in formula VII.

Borate of the eighth class is represented by the formula

$$[L^3]^+\{[<(CX^{10})_e(BX^{11})_f(X^{12})_g>^{h-}]_2M^{n+}\}^{i-} \qquad XIII$$

where $L^3$ is the same as defined in formula IV and C, $X^{10}$, $X^{11}$, $X^{12}$, N, n, e, f, g, h and i each are the same as defined in formula VIII.

Borate of the ninth class is represented by formula

$$[R_2M]^+\{[<(CX^{10})_e(BX^{11})_f(X^{12})_g>^{h-}]_2M^{n+}\}^{i-} \qquad XIV$$

where R and M each are the same as defined in formula X and C, $X^{10}$, $X^{11}$, $X^{12}$, M, n, e, f, g, h and i each are the same as defined in formula VIII.

Borate of formula VI exemplarily includes tributylammoniumtetra(p-tolyl)borate, tributylammoniumtetra(m-tolyl)borate, tributylammoniumtetra(o-fluorophenyl)borate, tributylammoniumtetra(p-fluorophenyl)borate, tributylammoniumtetra(m-fluorophenyl)borate, tributylammoniumtetra(3,5-difluorophenyl)borate, dimethylaniliniumtetra(o-tolyl)borate, dimethylaniliniumtetra(p-tolyl)borate, dimethylaniliniumtetra(m-tolyl)borate, dimethylaniliniumtetra(o-fluorophenyl)borate, dimethylaniliniumtetra(p-fluorophenyl)borate, dimethylaniliniumtetra(m-fluorophenyl)borate, dimethylaniliniumtetra(3,5-difluorophenyl)borate, dimethylaniliniumtetra(pentafluorophenyl)borate, triphenylphosphoniumtetraphenylborate, triphenylphosphoniumtetra(o-tolyl)borate, triphenylphosphoniumtetra(p-tolyl)borate, triphenylphosphoniumtetra(m-tolyl)borate, triphenylphosphoniumtetra(o-fluorophenyl)borate, triphenylphosphoniumtetra(p-fluorophenyl)borate, triphenylphosphoniumtetra(m-fluorophenyl)borate, triphenylphosphoniumtetra(3,5-difluorophenyl)borate and triphenylphosphoniumtetra (pentafluorophenyl)borate and further include trialkyl-substituted ammonium salts such as triethylammoniumtetra(o-fluorophenyl)borate, triethylammoniumtetra(pentafluorophenyl)borate, triethylammoniumtetra(phenyl)borate, tripropylammoniumtetraphenylborate, tri(n-butyl)ammoniumtetra(phenyl)borate, trimethylammoniumtetra(p-tolyl)borate, trimethylammoniumtetra(o-tolyl)borate, tripropylammoniumtetra(o,p-dimethylphenyl) borate, tributylammoniumtetra(p-trifluoromethylphenyl)borate, tributylamnoniumtetra(pentafluorophenyl)borate and tri (n-butyl)ammoniuntetra(o-tolyl)borate; N,N-dialkylanilinium salts such as N,N-dimethylaniliniumtetra(phenyl)borate, N, N-diethylaniliniumtetra(phenyl)borate and N,N-2,4,6-pentamethylaniliniumtetra(phenyl)borate and dialkylammonium saits such as di(1-propyl)ammoniumtetra(pentafluorophenyl)borate and dicyclohexylammoniumtetraphenylborate.

Particularly preferred are tributylammoniuintetra(o-fluorophenyl)borate, tributylammoniumtetra(p-fluorophenyl)borate, tributylammoniumtetra(m-fluorophenyl)borate, tributylammoniumtetra(3,5-difluorophenyl)borate, tributylammoniumtetra(pentafluorophenyl)borate, dimethylaniliniumtetra(o-fluorophenyl)borate, dimethylaniliniumtetra(p-fluorophenyl)borate, dimethylaniliniumtetra(m-fluorophenyl)borate, dimethylaniliniumtetra(3,5-difluorophenyl)borate and dimethylaniliniumtetra(pentafluorophenyl)borate; tributylammoniumtetra(pentafluorophenyl)borate and dimethylaniliniumtetra(pentafluorophenyl)borate.

Borate of formula VII exemplarily includes monohydrocarbyl-substituted ammonium salts such as tributylammonium-1-carbaundecaborate, tributylammonium-1-carbadecaborate, tributylammonium-6-cacbaundecaborate, tributylammonium-7-carbaundecaborate, tributylammonium-7,8-dicarbaundecaborate, tributylammonium-2,9-dicarbaundecaborate, methylammonium-1-carbadodecaborate, ethylammonium-1-carbadodecaborate, propylammonium-1-carbadodecaborate, isopropylammonium-1-carbadodecaborate, (n-butyl)ammonium-1-carbadodecaborate, anilinium-1-carbadodecaborate and (p-tolyl)ammonium-1-carbadodecaborate; dihydrocarbyl-substituted ammonium salts such as dimethylanilinium-1-carbaundecaborate, dimethylanilinium-1-carbadodecaborate, dimethylanilinium-1-carbadecaborate, dimethylanilinium-6-carbaundecaborate, dimethylanilinium-7-carbaundecaborate, dimethylanilinium-7,8-dicarbaundecaborate, dimethylanilinium-2,9-dicarbaundecaborate, dimethylammonium-1-carbadodecaborate, diethylammonium-1-carbadodecaborate, dipropylammonium-1-carbadodecaborate, diisopropylammonium-1-carbadodecaborate, di(n-butyl)ammonium-1-carbadodecaborate, diphenylammoniun-1-carbadodecaborate and di(p-tolyl)ammonium-1-carbadodecaborate and trihydrocarbyl-substituted ammonium salts such as trimethylammonium-1-carbadodecaborate, triethylammonium-1-carbadodecaborate, tripropylammonium-1-carbadodecaborate, tri(n-butyl)ammonium-1-carbadodecaborate, triphenylammonium-1-carbadodecaborate, tri(p-tolyl)ammonium-1-carbadodecaborate, N,N-dimethylanilinium-1-carbadodecaborate and N,N-diethylanilinium-1-carbadodecaborate.

Borate of formula VIII exemplarily includes tributylammoniumbis(nonahydride-1,3-dicarbaunaborate)cobaltate(III), tributylammoniumbis(undecahydride-7,8-dicarbaundecaborate)ferrate(III), tributylammoniumbis(undecahydride-7,8-dicarbaundecaborate)cobaltate(III), tributylammoniumbis(undecahydride-7,8-dicarbaundecaborate)nickelate(III),

tributylammoniumbis(dodecahydridedicarbadodecaborate)-cobaltate(III), tributylammoniumbis(undecahydride-7-carbaundecaborate)chromate( III), tributylammoniumbis(undecahydride-7-carbaundecaborate)manganate(IV), tributylammoniumbis(undecahydride-7-carbaundecaborate)cobaltate(III), tributylammoniumbis(undecahydride-7-carbaundecaborate)nickelate (IV), dimethylaniliniumbis(nonahydride-1,3-dicarbaunaborate)cobaltate(III), dimethylaniliniumbis(undecahydride-7,8-dicarbaundecaborate)ferrate(III), dimethylaniliniumbis(undecahydride-7,8-dicarbaundecaborate)cobaltate(III), dimethylaniliniumbis(undecahydride-7,8-dicarbaundecaborate)nickelate(III), dimethylaniliniumbis(dodecahydridedicarbadodecaborate)-cobaltate(III), dimethylaniliniumbis(undecahydride-7-carbaundecaborate)chromate(III), dimethylaniliniumbis(undecahydride-7-carbaundecaborate)manganate(IV), dimethylaniliniumbis (undecahydride-7-carbaundecaborate)cobaltate(III), dimethylaniliniumbis(undecahydride-7-carbaundecaborate)nickelate(IV), triphenylphosphoniumbis(nonahydride-1,3-dicarbaunaborate)cobaltate(III), triphenylphosphoniumbis(undecahydride-7,8-dicarbaundecaborate)ferrate(III), triphenylphosphoniumbis(undecahydride-7,8-dicarbaundecaborate)cobaltate(III), triphenylphosphoniumbis(undecahydride-7,8-dicarbaundecaborate)nickelate(III), triphenylphosphoniumbis(dodecahydridedicarbadodecaborate)-cobaltate(III), triphenylphosphoniumbis(undecahydride-7-carbaundecaborate)chromate(III), triphenylphosphoniumbis(undecahydride-7-carbaundecaborate)manganate(IV), triphenylphosphoniumbis(undecahydride-7-carbaundecaborate)cobaltate(III) and triphenylphosphoniumbis(undecahydride-7 carbaundecaborate)nickelate(IV).

Borate of formula VIV exemplarily includes trityltetraphenylborate, trityltetra(o-tolyl)borate, trityltetra(p-tolyl)borate, trityltetra(m-tolyl)borate, trityltetra(o-fluorophenyl)borate, trityltetra(p-fluorophenyl)borate, trityltetra(m-fluorophenyl) borate, trityltetra(3,5-difluorophenyl)borate, trityltetra(pentafluorophenyl)borate, tropyliumtetraphenylborate, tropyliumtetra(o-tolyl)borate, tropyliumtetra(p-tolyl)borate, tropyliumtetra(m-tolyl)borate, tropyliumtetra(o-fluorophenyl) borate, tropyliumtetra(p-fluorophenyl)borate, tropyliumtetra(m-fluorophenyl)borate, tropyliumtetra(3,5-difluorophenyl) borate and tropyliumtetra(pentafluorophenyl)borate.

Preferred are trityltetra(o-fluorophenyl)borate, trityltetra(p-fluorophenyl)borate, trityltetra(m-fluorophenyl)borate, trityltetra(3,5-difluorophenyl)borate, trityltetra(pentafluorophenyl)borate, tropyliumtetra(o-fluorophenyl)borate, tropyliumtetra(p-fluorophenyl)borate, tropyliumtetra(m-fluorophenyl)borate, tropyliumtetra(3,5-difluorophenyl)borate and tropyliumtetra(pentafluorophenyl)borate.

More preferred are trityltetra(pentafluorophenyl)borate and tropyliumtetra(pentafluorophenyl)borate.

Borate of formula X exemplarily includes ferroceniumtetraphenylborate, ferroceniumtetra(o-tolyl)borate, ferroceniumtetra(p-tolyl)borate, ferroceniumtetra(m-tolyl)borate, ferroceniumtetra(o-fluorophenyl)borate, ferroceniumtetra(p-fluorophenyl)borate, ferroceniumtetra(m-fluorophenyl)borate, ferroceniumtetra(3,5-difluorophenyl )borate and ferroceniumtetra(pentafluorophenyl)borate.

Preferred are ferroceniumtetra(o-fluorophenyl)borate, ferroceniumtetra(p-fluorophenyl)borate, ferroceniumtetra (m-fluorophenyl)borate, ferroceniumtetra(3,5-difluorophenyl)borate and ferroceniumtetra(pentafluorophenyl)borate.

More preferred is ferroceniumtetra(pentafluorophenyl)borate.

Borate of formula XI exemplarily includes trityl-1-carbaundecaborate, trityl-1-carbadodecaborate, trityl-1-carbadecaborate, trityl-6-carbaundecaborate, trityl-7-carbaundecaborate, trityl-7,8-dicarbaundecaborate, trityl-2,9-dicarbaundecaborate, tropylium-1-carbaundecaborate, tropylium-1-carbadodecaborate, tropylium-1-carbadecaborate, tropylium-6-carbaundecaborate, tropylium-7-carbaundecaborate, tropylium-7,8-dicarbaundecaborate and tropylium-2,9-dicarbaundecaborate.

Borate of formula XII exemplarily includes ferrocenium-1-carbaundecaborate, ferrocenium-1-carbadodecaborate, ferrocenium-1-carbadecaborate, ferrocenium-6-carbaundecaborate, ferrocenium-7-carbaundecaborate, ferrocenium-7,8-dicarbaundecaborate and ferrocenium-2,9-dicarbaundecaborate.

Borate of formula XIII exemplarily includes tritylbis(nonahydride-1,3-dicarbaunaborate)cobaltate(III), tritylbis(undecahydride-7,8-dicarbaundecaborate)-ferrate(III), tritylbis(undecahydride-7,8-dicarbaundecaborate)-cobaltate(III), tritylbis(undecahydride-7,8-dicarbaundecaborate)-nickelate(III), tritylbis(dodecahydridedicarbadodecaborate)cobaltate(III), tritylbis(undecahydride-7-carbaundecaborate)chromate(III), tritylbis(undecahydride-7-carbaundecaborate) manganate(IV), tritylbis(undecahydride-7-carbaundecaborate)cobaltate(III), tritylbis(undecahydride-7-carbaundecaborate)nickalate(IV), tropyliumbis(nonahydride-1,3-dicarbaunaborate)-cobaltate(III), tropyliumbis(undecahydride-7,8-dicarbaundecaborate)-ferrate(III), tropyliumbis(undecahydride-7,8-dicarbaundecaborate)-cobaltate(III), tropyliumbis(undecahydride-7,8-dicarbaundecaborate)-nickelate(III), tropyliumbis(dodecahydridedicarbadodecaborate) cobaltate(III), tropyliumbis(undecahydride-7-carbaundecaborate)chromate(III), tropyliumbis(undecahydride-7-carbaundecaborate)manganate(IV), tropyliumbis(undecahydride-7-carbaundecaborate)cobaltate(III) and tropyliumbis (undecahydride-7-carbaundecaborate)nickelate(IV).

Borate other than those of foumuale VI through XIV includes higher hydrogenated boron anion complex; i.e. a compound derived from diborane and tetrahydroborate, such as tributylammoniumnonaborate, tributylammoniumdecaborate, tributylammoniumundecaborate, tributylammoniumdodecaborate, dimethylammoniumnonaborate, dimethylammoniumdecaborate, dimethylammoniumundecaborate, dimethylanmoniumdodecaborate, triphenylamnoniumnonaborate, triphenylammoniumdecaborate, triphenylammoniumundecaborate, triphenylammoniumdodecaborate, tritylammoniumnonaborate, tritylammoniumdecaborate, tritylammoniumundecaborate, tritylammoniumdodecaborate, ferroceniumammoniumnonaborate, ferroceniumammoniumdecaborate, ferroceniumammoniumundecaborate, ferroceniumamoniumdodecaborate, tropyliumammoniumnonaborate, tropyliumammoniumdecaborate, tropyliumammoniumundecaborate and tropyliumammoniumdodecaborate.

Borane used as Component (C) exemplarily includes triphenylborane, tri(o-tolyl)borane, tri(p-tolyl)borane, tri(m-tolyl)borane, tri(o-fluorophenyl)borane, tri(p-fluorophenyl)borane, tri(m-fluorophenyl)borane,tri(3,5-difluorophenyl)borane and tri(pentafluorophenyl)borane.

Preferred are tri(o-fluorophenyl)borane, tri(p-fluorophenyl)borane, tri(m-fluorophenyl)borane,tri(3,5-difluorophenyl)borane and tri(pentafluorophenyl)borane.

More preferred is tri(pentafluorophenyl)borane.

Another eligible borane includes decaborane, 7,8-dicarbaundecaborane, 2,7-dicarbaundecaborane, undecahydride-7,8-dimethyl-7,8-dicarbaundecaborane, dodecahydride-11-methyl-2,7-dicarbaundecaborane, 4-carbanonaborane, 1,3-dicarbanonaborane, 6,9-dicarbadecaborane and dodecahydride-1-methyl-1,3-dicarbadecaborane.

The inventive catalyst are prepared by mutual contact of the metallocene compound (a) of formula I with Components (B) and/or (C) or by mutual contact of the metallocene compound (a) of formula I with Components (B) and/or at least one of the compounds (b) through (d). There is no particular restriction imposed upon the sequences or order of mutual contact of components (a) through (d) and Components (B) and (C). Preferred sequences are as follows:

For the sake of brevity, the sequences of addition are indicated by the arrow unless otherwise noted.

2-1 Add Component (B) to the component resulted from the procedures of 1-1 to 1-12 shown below.
2-2 Add Component (C) to the component resulted from the procedures of 1-1 to 1-12 shown below.
2-3 Add Components (B) and (C) to the component resulted from the procedures of 1-1 to 1-12.

1-1 only component (a).
1-2 Add component (a) to component (b).
1-3 Add oomponent (a) to component (c).
1-4 Add component (a) to component (d).
1-5 Add components (a) through (c) simultaneously.
1-6 (a) ← (b) ← (c)
1-7 (a) ← (c) ← (b)
1-8 Add component (a) to a mixture of (b) and (c) .
1-9 [(a) ← (b)] ← (d)
1-10 [(a) ← (c)] ← (d)
1-11 [(a) ← (b) ← (c)] ← (d)
1-12 [(a) ← (c) ← (b)] ← (d)

Preferred combinations are 2-1 and 1-1, 2-2 and 1-1, 2-1 and 1-2, 2-2 and 1-2, 2-1 and 1-3, 2-1 and 2-2, 2-1 and 1-5, 1-6 or 1-7, 2-2 and 1-5, 1-6 or 1-7, 2-3 and 1-5, 1-6 or 1-7 and theses combinations added with component (d).

Furthermore, in case of using three components, the following procedures are preferred.

3-1 Add components (a) and (b) and component (B) simultaneouly.
3-2 (a) ← (b) ← (B)
3-3 (a) ← (B) ← (b)
3-4 Add component (a) to a mixture of component (b) and Component (B).
4-1 Add components (a) and (b) and Component (C) simultaneouly.
4-2 (a) ← (b) ← (C)
4-3 (a) ← (C) ← (b)
4-4 Add component (a) to a mixture of component (b) and Component (C).
5-1 Add components (a) and (c) and Component (B) simultaneouly.
5-2 (a) ← (c) ← (B)
5-3 (a) ← (B) ← (c)
5-4 Add component (a) to a mixture of component (c) and Component (B).
6-1 Add components (a) and (c) and Component (C) simultaneouly.
6-2 (a) ← (c) ← (C)
6-3 (a) ← (C) ← (c)
6-4 Add component (a) to a mixture of component (c) and Component (C).

Preferred procedures for using four componets are as follows:

7-1 Add components (a) through (c) and Component (B) simultaneouly.
7-2 (a) ← (b) ← (c) ← (B)
7-3 (a) ← (b) ← (B) ← (c)
7-4 (a) ← (c) ← (b) ← (B)
7-5 (a) ← (c) ← (B) ← (b)
7-6 (a) ← (B) ← (b) ← (c)
7-7 (a) ← (B) ← (c) ← (b)
8-1 Add components (a) through (c) and Component (C) simultaneously.
8-2 (a) ← (b) ← (c) ← (C)
8-3 (a) ← (b) ← (C) ← (c)
8-4 (a) ← (c) ← (b) ← (C)
8-5 (a) ← (c) ← (C) ← (b)
8-6 (a) ← (C) ← (b) ← (c)
8-7 (a) ← (C) ← (c) ← (b)

Preferred procedures for using five componets are as follows:

9-1 Add components (a) through (c) and Components (B) and (C) simultaneouly.
9-2 (a) ← (b) ← (c) ← (B) ← (C)
9-3 (a) ← (b) ← (c) ← (C) ← (B)
9-4 (a) ← (c) ← (b) ← (B) ← (C)
9-5 (a) ← (c) ← (b) ← (C) ← (B)
9-6 (a) ← (c) ← (B) ← (b) ← (C)
9-7 (a) ← (c) ← (B) ← (C) ← (b)
9-8 (a) ← (B) ← (b) ← (c) ← (C)
9-9 (a) ← (B) ← (c) ← (b) ← (C)
9-10 (a) ← (B) ← (c) ← (C) ← (b)
9-11 (a) ← (C) ← (b) ← (c) ← (B)
9-12 (a) ← (C) ← (b) ← (B) ← (c)
9-13 (a) ← (C) ← (c) ← (b) ← (B)
9-14 (a) ← (C) ← (c) ← (B) ← (b)
9-15 (a) ← (C) ← (B) ← (b) ← (c)
9-16 (a) ← (C) ← (B) ← (c) ← (b)

The following procedures are also eligible:

10-1 Add component (d) after procedures 3-1 through 3-4.
10-2 Add component (d) after procedures 4-1 through 4-4.
10-3 Add component (d) after procedures 5-1 through 5-4.
10-4 Add component (d) after procedures 6-1 through 6-4.
10-5 Add component (d) after procedures 7-1 through 7-7.
10-6 Add component (d) after procedures 8-1 through 8-7.
10-7 Add component (d) after procedures 8-1 through 8-7.

Particularly preferred among these procedures are 1-1, 1-2, 1-3, 2-1, 2-2, 2-3, 5-1, 5-2, 5-3, 7-1, 7-4, 9-1, 10-5, 10-7.

Preferred combinations of the various components for preparation of the inventive catalysts are shown below by way of example. As described above, the metallocene compound of formula I is modified by mutual contact of any one of components (b) through (d) and Components (B) and (C) such that it has the cyclopentadienyl structure, indenyl structure or fluorenyl structure peculiar thereto with the 5-member ring being free of peaks of hydrogen in 1H-NMR spectrum.

Combination 1

| | |
|---|---|
| component (a): | bis(cyclopentadienyl)zirconiumdichlorides such as bis(cyclopentadienyl)-zirconiumdichloride, bis(methylcyclopentadienyl)-zirconiumdichloride and bis(dimethylcyclopentadienyl)-zirconiumdichloride |
| component (b): | trialkylaluminium such as triethylaluminium, tributylaluminium and trihexylaluminium |
| component (c): | indenes such as indene, methylindene and ethylindene |

Component (B): methylaluminoxane
Component (C): a boron-containing at-complex such as trityltetra(pentafluorophenyl)borate, dimethylanilinium (pentafluorophenyl)-borate and tributylammonium-(pentafluorophenyl)borate
component (d): silica, silica alumina, alumina and polyethylene powder

Combination 2

component (a): bis(indenyl)zirconiumdichlorides such as bis(indenyl)zirconiumdichloride and bis (methylindenyl) zirconiumdichloride
component (b): trialkylaluminium such as triethylaluminium, tributylaluminium and trihexylaluminium
component (c): indenes such as indene, methylindene and ethylindene
Component (B): methylaluminoxane
component (C): a boron-containing at-complex such as trityltetra(pentafluorophenyl)borate, dimethylanilinium (pentafluorophenyl)-borate and tributylammonium-(pentafluorophenyl)borate
component (d): silica, silica alumina, alumina and polyethylene powder

Combination 3

component (a): bis(indenyl)zirconiumdichlorides such as bis(indenyl)zirconiumdichloride and bis(methylindenyl)zirconiumdichloride
component (b): trialkylaluminium such as triethylaluminium, tributylaluminium and trihexylaluminium
component (c): cyclopentadienes such as cyclopentadiene, methylcyclopentadiene and ethylcyclopentadiene
Component (B): methylaluminoxane
Component (C): triarylborane such as tri(pentafluorophenyl)borane
component (d): silica, silicaũEalumina, alumina and polyethylene powder

Combination 4

component (a): bis(indenyl)zirconiumdichloxides such as bis(indenyl)zirconiumdichloride and bis(methylindenyl)zirconiumdichloride
component (b): trialkylaluminium such as triethylaluminium, tributylaluminium and trihexylaluminium
component (c): crosslinked cyclopentadienes and crosslinked indenes such as ethylenebisindene, dimethylphenylenebiscyclopentadiene and isopropylenebiscyclopentadiene
Component (B): methylaluminoxane
component (C): triarylborane such as tri(pentafluorophenyl)borane
component (d): silica, silica alumina, alumina and polyethylene powder

Combination 5

component (a): bis(indenyl)zirconiumdialkyls such asbio(indenyl)zirconiumdimethyl and bis(methylindenyl)zirconiumdibenzyl
component (b): trialkylaluminium such as triethylaluminium, tributylaluminium and trihexylaluminium
component (c): indenes such as indene, methylindene and ethylindene
Component (B): methylaluminoxane
component (C): a boron-containing at-cmplex such as trityltetra(pentafluorophenyl)borate, dimethylanilinium(pentafluorophenyl)-borate and tributylammonium(pentafluorophenyl)borate
component (d): silica, silica alumina, alumina and polyethylene powder

Combination 6

component (a): bis(indenyl)zirconiumdialkyls such as bis(indenyl)zirconiumdimethyl and bis(methylindenyl)zirconiumdibenzyl
component (b): alkylmagnesiums such as dibutylmagnesium, ethylmagnesiumchloride and methylmagnesiumbromide
component (c): indenes such as indene, methylindene and ethylindene
Component (B): methylaluminoxane
Component (C): a boron-containing at-cmplex such as trityltetra(pentafluorophenyl)borate, dimethylanilinium(pentafluorophenyl)-borate and tributylammonium(pentafluorophenyl)borate

component (d): silica, silica alumina, alumina and polyethylene powder

The contacting operation may be carried out in an atmosphere of an inert gas such as nitrogen or argon in the presence of an inert liquid hydrocarbon solvent such as an aromatic hydrocarbon of 6 - 12 carbon atoms including benzene, toluene, xylene and ethylbenzene or an aliphatic or alicyclic hydrocarbon of 5 - 12 carbon atoms including heptane, hexane, decane, dodecane and cyclohexane, with or without stirring at a temperature of from 0°C to 300°C, preferably from 30°C to 250°C, more preferably from 60°C to 200°C, more preferably 100°C to 170°C for a period of from 5 minutes to 150 hours, preferably 10 minutes to 50 hours, more preferably 30 minutes to 10 hours.

In the contact operation, as described above, there may be eligible either the aromatic hydrocarbon solvent in which some components are soluble or the aliphatic hydrocarbon solvent in which some components are insoluble or hardly soluble. If the aromatic hydrocarbon solvent is used in the first stage of each contacting sequence, the components may be contacted together throughout the stage of contacting sequences without having to remove that particular solvent. Alternatively, the aromatic hydrocarbons may be removed upon completion of the first stage by addition of an insoluble or hardly soluble inert hydrocarbon liquid such as an aliphatic or alicyclic hydrocarbon solvent including pentane, hexane, decane, dodecane and cyclohexane which allows the reaction product to precipitate and thereafter dry. Alternatively, part or all of the aromatic hydrocarbon solvent maybe removed as by means of drying.

There is no restriction imposed upon the amount of component (a), Components (B) and (C) and selective components (b) through (d). The following range of amounts are preferred.

The amount of component (b) is usually less than 100 moles, preferably 0.01 - 100 moles, more preferably 0.1 - 50 moles, more preferably 1 - 20 moles per mole of the component (a). The amount of component (c) is usually less than 100 moles, preferably 0.01 - 100 moles, more preferably 0.1 - 50 moles, more preferably 0.5 - 20 moles per mole of the component (a). The amount of Component (B) is represented by the atomic ratio of aluminum in Component (B) to transition metal $Me^1$ in component (a) which is 1 - 100,000, preferably 5 - 1,000, more preferably 50 - 100. The amount of Component (C) is 0.01 - 100 moles, preferably 0.1 - 50 moles, more preferably 0.2 - 10 moles per mole of the component (a). The amount of component (d) is 1 gram per 0.0001 to 5 millimole, preferably 0.001 - 0.5, more preferably 0.02 -0.04 millimole of component (a).

According to the invention, olefinic hydrocarbons are polymerized or copolymerized in the presence of the catalyst comprising the catalyst component having the cyclopentadienyl structure, indenyl structure or fluorenyl structure with the 5-member ring position being free of peak of hydrogen in 1H-NMR spectrum and promoter components such as borane and/or borate or in the presence of the catalyst having its intrinsic cyclopentadienyl structure, indenyl structure or fluorenyl structure with a 5-member ring thereof being free of peak of hydrogen in 1H-NMR spectrum. Alternatively, the catalyst composition and a modified organoaluminum compound or the catalyst composition and borate and/or borane may be individually added to or first contacted together and then added to the polymerization reaction system. In the case where the contact operation is carried out prior to addition into the polymerization reaction system, the catalyst component may be contacted with the modified organoaluminum compound or the catalyst composition and borate and/or borane in a similar manner prior to addition into the polymerization reaction system or during the stage of contacting operation of each compound for preparation of the catalyst component.

In either case, the amount of modified organoaluminum compound is adjusted such that its atomic ratio of aluminum to transitional metal in the catalyst component is in the range of 1 - 100,000, preferably 5 - 1,000, more preferably 50 - 100. The amount of borane and/or borate is adjusted such that the atomic ratio of boron compound to transitional metal in the catalyst is in the range of 0.01 - 100, preferably 0.1 - 50, more preferably 0.2 - 10.

Olefins useful for the purpose of the invention are α-olefins, cyclic olefins, diene, trienes and stylene homologs.

Eligible α-olefins are those having a carbon number of 2 to 12, preferably 2 to 8, and chosen from the group of ethylene, propylene, butene-1, hexene-1, 4-methylpentene-1 and the like. They may be homopolymerized or copolymerized as by alternating, random or block copolymerization processes.

Exemplified as α-olefin copolymers are those of ethylene with an α-olefin comonomer of a carbon number of 3 to 12, preferably 3 to 8, such as ethylene-propylene, ethylene-butene-1, ethylene-hexene-1 or ethylene-4-methylpentene-1, or of propylene with an a-olefin comonomer of a carbon number of 3 to 12, preferably 3 to 8, such as propylene-propylene, propylene-butene-1, propylene-hexene-1 or propylene-4-methylpentene-1. In either copolymer, the content of the comonomer may be variable within the range of less than 90% by mole of total monomer. Generally, ethylene-based copolymers have a comonomer content of not more than 40%, preferably smaller than 30%, more preferably below 20%, whereas propylene-based copolymers have a similar content in the range of 1 to 90%, preferably 5 to 90%, more preferably 10 to 70%, each such percentage being by mole based on total monomer.

The cyclic olefins are chosen from those having a carbon number of 3 - 24, preferably 3 - 18, exemplarily including cyclopentene, cyclobutene, cyclohexene, 3-methylcyclohexene, cyclooctene, cyclodecene, cyclododecene, tetracyclodecene, octacyclodecene, dicyclopentadiene, norbornene, 5-methyl-2-norbornene, 5-ethyl-2-norbornene, 5-isobutyl-2-norbornene, 5,6-dimethyl-2-norbornene, 5,5,6-trimethyl-2-norbornene and ethylidenenorbornene. They may be copolymerized usually with a given α-olefin in which instance the content of the cyclic olefin in the resulting copolymer

is less than 50% by mole, usually 1 to 50% by mole, preferably 2 to 50% by mole.

Suitable dienes and trienes are chain polyene of the formula

$$CH_2CH(CH)_t(CHCH_2)_u \qquad XV$$

wherein u is an integer of 1 or 2, and t is 0 - 20, preferably 2 - 20.

Examples of the above polyenes include butadiene, 1,4-hexadiene, 1,5-hexadiene, 1,9-decadiene, 1,13-tetradecadiene, 2,6-dimethyl-1,5-heptadiene, 2-methyl-2,7-octadiene, 2,7-dimethyl-2,6-octadiene and 1,5,9-decatriene.

Chain dienes or trienes copolymerizable with a given α-olefin are usually contained in the copolymer in an amount of 0.1 to 50% by mole, preferably 0.2 to 10%by mole.

Eligible styrene homologs are styrene and styrene derivatives such as t-butylstyrene, α-methylstyrene, p-methylstyrene, divinylbenzene, 1,1-diphenylethylene, N,N-dimethyl-p-aminoethylstyrene and N,N-diethyl-p-aminoethylstyrene.

The catalyst component of the invention may be suitably used to reform olefin homopolymers or copolymers by further polymerization with a polar monomer such as an unsaturated carboxylate including methyl acrylate, methyl methacrylate, butyl methacrylate, dimetyl maleate, diethyl maleate, monomethyl maleate, diethyl fumarate, dimethyl itaconate and the like. The content of the polar monomer in the reformed polymer is usually in the range of 0.1 to 10% by mole, preferably 0.2 to 2% by mole.

The polymerization reaction may be carried out in the presence of the inventive catalyst component and the promoter components or the inventive catalyst. The inventive catalyst may be applied to slurry, solution and vapor polymerization processes. Slurry and vapor phase modes of reaction may be conveniently chosen which are conducted in a substantially oxygen-free, moisture-free state and in the presence of or in the absence of an inert solvent such as aliphatic hydrocarbons including hexane, heptane and the like, aromatic hydrocarbons including benzene, toluene, xylene and the like and alicyclic hydrocarbons including cyclohexane, methylcyclohexane and the like. Reaction temperatures may be at from 20°C to 200°C, preferably 50 C to 100°C, reaction pressures at from atmospheric to 70 kg/$cm^2$G, preferably atmospheric to 20 kg/$cm^2$G and reaction timelenghs at from 5 minutes to 10 hours, preferably 5 minutes to 5 hours.

The molecular weight of a polymer to be formed can be effectively controlled by feeding a predetermined amount of hydrogen into the reaction system, although this control may be also effected by adjusting the reaction temperature, molar ratio of the catalyst and other parameters.

There may be used some scavengers for removing moisture from the reaction system. Such scavengers include an organoaluminum such as trimethylaluminum, triethylaluminum and triisobutylaluminum, the aforesaid modified organoaluminum as well as a modified organoaluminum having a branched alkyl group.

The inventive catalyst component may be suitably used for a multi-stage mode of polymerization involving different hydrogen concentrations, monomer concentrations, polymerization pressures and temperatures and other reacticn parameters.

The invention will be further described by way of the following examples which should not be regarded as limiting the scope of the invention.

1H-NMR analysis was made by the following procedure. Hydrogen bonded to the 5-member ring of a cyclopentadienyl or indenyl group of metallocene compound was measured with the use of NMR (nuclear magnetic resonance, Model EX-270 or EX-400 of Nippon Denshi Company Limited) at 27°C by counting the number of pulses (128 times).

Test samples were prepared by admixing more than 0.2 ml catalyst solution having a metal concentration (taitanium, zirconium and hafnium)of more than 0.02 mmolMetal/ml with 0.2 ml solvent of dehydrated benzene or dehydrated toluene each having deuterium.

<u>Evaluation of Polymer Properties</u>

Melt Index (MI): measured in accordance with ASTMD D1238-57T at 190°C with load of 2.16kg

Density : measured in accordance with ASTMDD1505-68

Melting Point : measured by a differential scanningcalorimeter(DSC) where a 5mg sample was held at 180°C for 3 minutes, cooled to 0°C at 10°C per minute, held at 0°C for 10 minutes and finally warmed at 10°C per minute.

<u>Preparation of modified Orqano-Aluminum Compound</u>

13 grams of cupric sulfate pentahydrate were taken into a 300 ml three-necked flask equipped with an electromagnetic stirrer and suspended in 50 ml of toluene. 150ml of trimethylaluminum (1 mmol/ml concentration) were added in droplets to the resulting suspension at 0°C over 2 hours. Reaction was continued at 25°C for 24 hours. The reaction product was filtrated with toluene removed, thereby obtaining 4 grams of a white crystalline methylaluminoxane (MAO).

Inventive Example 1

A 300 cc three-necked flask was charged with 100 ml refined toluene, 10 mmol bis(1,3-dimethylcyclopentadienyl)-zirconiumdichoride ($(1,3-Me_2Cp)_2ZrCl_2$) and 60 mmol indene in nitrogen atmosphere. The admixture was stirred at room temperature for 30 minutes, followed by addition of droplets of 60 mmol triisobutylaluminum and thereafter added with 20 mmol 1,3,5-trimethylbenzene (mesitylene). The resulting admixture was examined for hydrogen peaks in a 1H-NMR chart. The admixture was stirred at a temperature of 110°C for 3 hours thereby providing a reactive solution.

Fig. 1 is a 1H-NMR chart showing a hydrogen peak of the above solution. In the chart, the peaks appearing where the chemical shift δ is equal to 5.7 ppm and 6.0 ppm are hydrogen bonded to the dimetylcyclopentadiene group of zirconocene. The peaks observed where δ is equal to 6.5 ppm and 7.0 ppm respectively indicated hydoregen bonded to the double bond of the 5-member ring of indene. The peak of 7.0 ppm is in superimpose relation to that of hydrogen bonded to the benzene ring of mesitylene.

Fig. 2 is a 1H-NMR chart showing hydrogen peaks of the above solution added with 60 mmol triisobutylaluminum and stirred at a temperature of 110°C for 3 hours. There *were* observed only the peak of isobutylene where δ is 5.0 ppm, that of indene where δ are 6.5 and 7.0 ppm and that of mesitylene where δ is 7.0 ppm, indicating the absence of the previously observed peaks of hydrogen (δ=6.0 ppm, δ=5.7 ppm) bonded to the dimetylcyclopentadiene group of bis(1,3-dimethylcyclopentadienyl)zirconiumdichoride. There were no peak of hydrogen bonded to the 5-member ring of the zirconocene compound.

Polymerization

A 3 litter stainless steel autoclave equipped with a stirrer was purged with nitrogen, followed by addition of 200 grams dried ocean sand-and the above solution in an amount of 1 milligram-atom as the zirconium (Zr) atom and 1 ml solution of 1mmol/ml of methylaluminoxane. The admixture was heated to 75°C and charged with a mixed gas of butene-1 and ethylene (butene-1/ethylene molar ratio 0.25) to bring the reactor pressure up to $9kgf/cm^2G$, whereupon polymerization reaction was initiated and continued for 1 hour with continued charge of a mixed gas of ethylene and butene-1 (butene-1/ethylene molar ratio 0.05) to maintain a total pressure at 9 $kgf/cm^2G$. Upon completion of the reaction, excess gases were expelled and the autoclave was cooled, followed by removal of the sand. Analysis of the resulting 213 grams white polymer indicated a catalytic activity of 213 kg/gZr, MFR of 0.1 g/10 min, a density of 0.9219 $g/cm^2$, MP of 114.5°C and Mw/Mn of 3.1.

Inventive Example 2

A 300 cc three-necked flask was charged with 100 ml refined xylene and 10 mmol bisindenylzirconiumdichloride ($Ind_2ZrCl_2$) in nitrogen atmosphere to provide a solution.

A 50 ml flask was charged in nitrogen atmosphere with 2 ml of the above solution and 5 ml solution methylaluminoxane (concentration 4 mmol/ml). The admixture was stirred at room temperature for one week. 1H-NMR analysis of the resulting solution revealed that the peaks of hydrogen (δ = 6.3 ppm, δ = 6.0 ppm) bonded to 5-member rings of the indenyl group had dissappeared. There were observed no peaks of hydrogen bonded to the other 5-member ring of the zirconocene compound.

Polymerization

The procedure of Inventive Example 1 was followed except for the use of the contact reaction product of this example, thereby obtaining 148 grams white polymer having a catalytic activity of 148 kg/gZr, MFR of 5.4 g/10 min, a density of 0.9238 $g/cm^2$, MP of 114.8°C and Mw/Mn of 2.9.

Inventive Example 3

A 300 cc three-necked flask was charged in nitrogen atmosphere with 100 ml refined xylene and 10 mmol bisindenylzirconiumdimethyl ($Ind_2ZrMe_2$) and added for 3 hours with droplets of 20 mmol of triisobutylaluminum in nitrogen atmosphere. The resulting admixture was stirred at a temperature of 140°C for 2 hours, thereby obtaining a reactive solution. 1H-NMR analysis of the resulting solution revealed that there were no peaks of hydrogen bonded to the 5-member ring of the indenyl group which peak had been previously ovserved where δ is equal to 6.1 ppm and δ is

equal to 5.9 ppm. There were observed no peaks of hydrogen bonded to the other 5-member ring of the zirconocene compound.

Polymerization

A 50 cc flask was charged with in nitrogen atmosphere the above catalyst component solution in an amount of one milligram-atom as the zirconiumu (Zr) atom and 1 ml solution of 1 mmol/ml of methylaluminoxane. The admixture was stirred at room temperature for 30 minutes. The resulting contact reaction product was ployemrized by the procedure of Inventive Example 1, thereby obtaining 205 grams white polymer having a catalytic activity of 205 kg/gZr, MFR of 0.07 g/10 min, a density of 0.9227 g/$cm^2$, MP of 114.0°C and Mw/Mn of 2.8.

Inventive Example 4

A 300 cc three-necked flask was charged in nitrogen atmosphere with 100 ml refined mesitylene and thereafter with 5 mmol biscyclopentadienylzirconiumdichloride ($Cp_2ZrCl_2$) and 20 mmol indene. The resulting admixture was stirred at room temperature for 30 minutes and thereafter added at room temperature for 3 hours with droplets of 20 mmol triethylaluminum. The resulting solution was stirred at a temperature of 160°C for 4 hours, thereby obtaining a reactive solution. 1H-NMR analysis of the resulting solution revealed that the previously observed peaks of hydrogen bonded to the 5-member ring of the cyclopentadienyl group where δ is equal to 6.1 ppm had disappeared. There were observed no peak of hydrogen bonded to the other 5-member ring of the zirconocene compound.

Polymerization

A 50 cc flask was charged in nitrogen atmosphere with the above catalyst component solution in an amount of 1 milligram-atom as the zirconium (Zr) atom and 1 ml solution of 1 mmol/ml of methylaluminoxane. The admixture was stirred at room temperature for 30 minutes. The resulting contact reaction product was ployemrized by the procedure of Inventive Example 1, thereby obtaining 186 grams white polymer having a catalytic activity of 186 kg/gZr, MFR of 2.1 g/10 min, a density of 0.9240 g/$cm^2$, MP of 114.9°C and Mw/Mn of 3.2.

Inventive Example 5

A 300 cc three-necked flask was charged in nitrogen atmosphere with 100 ml refined toluene and thereafter with 10 mmol biscyclopentadienylzirconiumhydridechloride ($Cp_2ZrHCL$), 20 mmol indene and 5 ml solution of methylaluminoxane (concentration 4 mmol/ml). The admixture was stirred at room temperature for 2 hours. The resulting admixture was further stirred at a temperature of 110°C for 2 hours, thereby obtaining a reactive soluiton. 1H-NMR analysis of the resulting solution revealed that the previously observed peak of hydrogen bonded to the 5-member ring of the cyclopentadienyl group where δ is equal to 6.2 ppm had disappeared. There were observed no peaks of hydrogen bonded to the other 5-member ring of the zirconocene compound.

Polymerization

A 50 cc flask was charged in nitrogen atmosphere with the above catalyst component solution in an amount of 1 milligram-atom as the zirconium (Zr) atom and 1 ml solution of 1 mmol/ml of methylaluminoxane. The admixture was stirred at room temperature for 30 minutes. The resulting contact reaction product was ployemrized by the procedure of Inventive Example 1, thereby obtaining 179 grams white polymer having a catalytic activity of 179 kg/gZr, MFR of 2.4 g/10 min, a density of 0.9217 g/$cm^2$, MP of 114.0°C and Mw/Mn of 3.4.

Inventive Example 6

A 300 cc three-necked flask was charged in nitrogen atmosphere with 100 ml refined mesitylene and thereafter with 10 mmol bisindenylzirconiumdibenzyl $Ind_2Zr(CH_2Ph)_2$ and 30 mmol 1,2,4-trimetylsilylcyclopentadiene. The resulting admixture was stirred at room temperature for 30 minutes and thereafter added at room temperature for 2 hours with droplets of 80 mmol tridecylaluminum. The resulting solution was stirred at a temperature of 160°C for 2 hours, thereby obtaining a reactive solution. 1H-NMR analysis of the resulting solution revealed that the previously observed peaks of hydrogen bonded to the 5-member ring of the indenyl group where δ is equal to 6.1 ppm and δ is equal to 5.9 ppm had disappeared. There were observed no peaks of hydrogen bonded to the other 5-member rings of the zirconocene compound.

Polymerization

A 50 cc flask was charged in nitrogen atomosphere with the above catalyst component solution in an amount of 1 milligram-atom as the zirconium (Zr) atom and 1 ml solution of 1 mmol/ml of methylaluminoxane. The admixture was stirred at room temperature for 30 minutes. The resulting contact reaction product was ployemrized by the procedure of Inventive Example 1, thereby obtaining 208 grams white polymer having a catalytic activity of 208 kg/gZr, MFR of 2.6 g/10 min, a density of 0.9223 g/$cm^2$, MP of 114.5°C and Mw/Mn of 3.5.

Inventive Example 7

A 300 cc three-necked flask was charged in nitrogen atmosphere with 100 ml refined toluene and thereafter with 10 mmol bis(1,3-dimetylcyclopentadienyl)zirconiumdichloride ((1,3-Me2Cp)2ZrC12) and 10 mmol indene. The resulting admixture was stirred at room temperature for 30 minutes and thereafter added at room temperature for 2 hours with droplets of 20 mmol triisobutylaluminum. The resulting solution was stirred at a temperature of 110°C for 2 hours, thereby obtaining a reactive solution. 1H-NMR analysis of the resulting solution revealed that the previously observed peaks of hydrogen bonded to the 5-member ring of the dimethylcyclopentadienyl group where δ is equal to 6.0 ppm and δ is equal to 5.7 ppm had disappeared. There were observed no peaks of hydrogen bonded to the other 5-member ring of the zirconocene compound.

Polymerization

A 50 cc flask was charged in nitrogen atmosphere with the above catalyst component solution in an amount of 1 milligram-atom as the zirconium (Zr) atom and 1 mmol trityltetra(pentafluorophenyl)borate. The admixture was stirre at room temperature for 30 minutes. The resulting contact reaction product was ployemrized by the procedure of Inventive Example 1, thereby obtaining 210 grams white polymer having a catalytic activity of 210 kg/gZr, MFR of 0.5 g/10 min, a density of 0.9211 g/$cm^2$, MP of 113.9°C and Mw/Mn of 3.8.

Inventive Example 8

A 300 cc three-necked flask was charged in nitrogen atmosphere with 100 ml refined toluene and thereafter with 10 mmol biscyclopentadienylzirconiumhydridechroride ($Cp_2ZrHCl$), 20 mmol indene and 5 ml methylaluminoxane (concentration 4 mmol/ml). The resulting admixture was stirred at room temperature for 2 hours and further stirred at a temperature of 110°c for 2 hours, thereby obtaining a reactive solution. 1H-NMR analysis of the resulting solution revealed that the previously observed peak of hydrogen bonded to a 5-member ring of the cyclopentadienyl group where δ is equal to 6.2 ppm had disappeared. There were observed no peaks of hydrogen bonded to the other 5-member rings of the zirconocene compound.

Polymerization

A 50 cc flask was charged in nitrogen atmosphere with the above catalyst in an amount of 1 milligram-atom as the zirconium (Zr) atom and 1 mmol dimethylaniliniumtetra(pentafluorophenyl)borate. The admixture was stirred at room temperature for 30 minutes. The resulting contact reaction product was ployemrized by the procedure of Inventive Example 1, thereby obtaining 340 grams white polymer having a catalytic activity of 340 kg/gZr, MFR of 2.0 g/10 min, a density of 0.9220 g/$cm^2$, MP of 114.6°C and Mw/Mn of 3.9.

Inventive Example 9

A 300 cc three-necked flask was charged in nitrogen atmosphere with 100 ml refined xylene, 10 mmol bisindenylzirconiumdimethyl ($Ind_2ZrMe_2$), 50 mmol ethylenebisindene and added for 3 hours with droplets of 20 mmol of triisobutylaluminum. The resulting admixture was stirred at a temperature of 140°C for 2 hours, thereby obtaining a reactive solution. 1H-NMR analysis of the resulting solution revealed that the previously observed peaks of hydrogen bonded to a 5-member ring of the indenyl group where δ is equal to 6.1 ppm and δ is equal to 5.9 ppm had disappeared. There were observed no peaks of hydrogen bonded to the other 5-member ring of the zirconocene compound.

Polymerization

A 50 cc flask was charged in nitrogen atmosphere with the above catalyst in an amount of 1 milligram-atom as the zirconium (Zr) atom and 1 mmol trityl-1-carbaundecaborate. The admixture was stirred at room temperature for 30

minutes. The resulting contact reaction product was polymerized by the procedure of Inventive Example 1, thereby obtaining 170 grams white polymer having a catalytic activity of 170 kg/gZr, MFR of 1.0 g/10 min, a density of 0.9216 g/cm$^2$, MP of 114.0°C and Mw/Mn of 3.3.

Inventive Example 10

A 300 cc three-necked flask was charged with 100 ml refined xylene, 10 mmol bisindenylzirconiumdichloride, 10 mmol indene ($Ind_2ZrCl_2$) and 15mmol dibutylmagenesium in nitrogen atmosphere.

A 50 ml flask was charged in nitrogen atmosphere with 2 ml of the above solution and 5 ml methylaluminoxane (concentration 4 mmol/ml). The admixture was stirred at a temperature of 140°C for 5 hours. 1H-NMR analysis of the resulting solution revealed the previously observed peaks of hydrogen bonded to the 5-member rings of the indenyl group where δ is equal to 6.3 ppm and δ is equal to 6.0 ppm had disappeared. There were observed no peaks of hydrogen bonded to the other 5-member rings of the zirconocene compound.

Polymerization

A 50 cc flask was charged in nitrogen atmosphere with the above catalyst in an amount of 1 milligram-atom as the zirconium (Zr) atom and 1 mmol tri(pentafluorophenyl)borane. The admixture was stirred at room temperature for 30 minutes. The resulting contact reaction product was ployemrized by the procedure of Inventive Example 1, thereby obtaining 220 grams white polymer having a catalytic activity of 220 kg/gZr, MFR of 1.8 g/10 min, a density of 0.9222 g/cm$^2$, MP of 114.3°C and Mw/Mn of 3.2.

Inventive Example 11

The following porimerization reaction was carried out using the catalyst of Inventive Example 1.

A 3 litter stainless steel autoclave equipped with a stirrer was purged with nitrogen, followed by addition of 200 grams dried ocean sand, the catalyst component solution of Inventive Example 1 in an amount of 1 milligram-atom as the zirconium (Zr) atom and 1ml solution of 1mmol/ml of methylaluminoxane. The admixture was heated to 75°C with stirring and charged with ethylene to bring the reactor pressure up to 9kgf/cm$^2$G, whereupon polymerization reaction was initiated and continued for 1 hour with continued charge of ethylene to maintain a total pressure at 9 kgf/cm$^2$G.

Upon completion of the reaction, excess gase of ethylene were expelled and the autoclave was cooled, followed by removal of the sand. Analysis of the resulting 211 grams white polymer indicated a catalytic activity of 211 kg/gZr, MFR of 2.2 g/10 min, a density of 0.9501 g/cm$^2$, a melting point (MP) of 131.5°C and Mw/Mn of 3.6.

Inventive Example 12

A 300 cc three-necked flask was charged in nitrogen atmosphere with 100 ml refined mesitylene, 10 mmol ethylenebisindenylzirconiumdichloride ($Et(Ind)_2ZrCl_2$), and 50 mmol indene. The admixture was stirred at room temperature followed by addition of droplets of 30 mmol for 2 hours at room temperature. The resulting admixture was stirred at a temperature of 110°C for 2 hours, thereby obtaining a reactive solution.

A 50 ml flask was charged in nitrogen atmosphere with the above solution in an amount of 0.2 mmol-atom as the zirconium (Zr) atom and 5 ml solution of 4 mmol/ml of methylaluminoxane. The admixture was stirred at room temperature for one week. 1H-NMR analysis of the resulting solution revealed that the previously observed peaks of hydrogen bonded to the 5-member ring of the indenyl group where δ is equal to 5.9, 6.1, 6.6 and 6.8 ppm had disappeared. There were observed no peaks of hydrogen bonded to the other 5-member ring of the zirconocene compound.

Polymerization

A 50 cc flask was charged in nitrogen atmosphere with the above catalyst component solution in an amount of 1 milligram-atom as the zirconium (Zr) atom and 1 mmol dimethylaniliniumtetra(pentafluorophenyl)borate. The admixture was stirred at room temperature for 30 minutes. The resulting contact reaction product was polymerized by the procedure of Inventive Example 1, thereby obtaining 332 grams white polymer having a catalytic activity of 332 kg/gZr, MFR of 5.5 g/10 min, a density of 0.9185 g/cm$^2$, MP of 109.2°C and Mw/Mn of 4.1.

Inventive Example 13

A 300 cc three-necked flask was charged in nitrogen atmosphere with 100 ml refined mesitylene, 5 mmol biscyclopentadienyltitaniumdichrolide ($Cp_2TiCl_2$) and 20 mmol indene. The admixture was stirred at room temperature

for 30 minutes and thereafter added at room temperature for 3 hours with droplets of 20 mmol of triethylaluminum. The resulting admixture was stirred at a temperature of 160°C for 4 hours, thereby obtaining a reactive solution. 1H-NMR analysis of the resulting solution revealed that the previously observed peak of hydrogen bonded to the 5-member ring of the cyclopentadienyl group where δ is equal to 6.0 ppm had disappeared. There were observed no peaks of hydrogen bonded to the other 5-member ring of the titanocene compound.

Polymerization

A 50 cc flask was charged in nitrogen atmosphere with the above catalyst component solution in an amount of 1 milligram-atom as the titanium (Ti) atom and 1 ml solution of 1 mmol/ml of methylaluminoxane. The admixture was stirred at room temperature for 30 minutes. The resulting contact reaction product was polymerized by the procedure of Inventive Example 1, thereby obtaining 113 grams white polymer having a catalytic activity of 113 kg/gZr, MFR of 3.2 g/10 min, a density of 0.9219 g/cm$^2$, MP of 98.2°C and Mw/Mn of 3.8.

Comparative Example 1

A 300 cc three-necked flask was charged in nitrogen atmosphere with 100 ml refined xylene and 10 mmol bisindenylzirconiumdimethyl (Ind2ZrMe2). 1H-NMR analysis of the resulting solution revealed that there were the peaks of hydrogen bonded to the 5-member ring of the indenyl group where δ is equal to 6.1 ppm and δ is equal to 5.9 ppm.

Polymerization

A 50 cc flask was charged in nitrogen atmosphere with the above catalyst component solution in an amount of 1 milligram-atom as the zirconium (Zr) atom and 1 ml solution of 1 mmol/ml of methylaluminoxane. The admixture was stirred at room temperature for 30 minutes. The resulting contact reaction product was polymerized by the procedure of Inventive Example 1, thereby obtaining 158 grams white polymer having a catalytic activity of 158 kg/gZr, MFR of 5.2 g/10 min, a density of 0.9232 g/cm$^2$, MP of 116.8°C and Mw/Mn of 2.1.

Comparative Example 2

A 300 cc three-necked flask was charged in nitrogen atmosphere with 100 ml refined mesitylene and 5 mmol biscyclopentadienylzirconiumdichrolide ($Cp_2ZrCl_2$). The admixture was stirred at room temperature for 30 minutes. 1H-NMR analysis of the resulting solution revealed that there were the peak of hydrogen bonded to the 5-member ring of the cyclopentadienyl group where δ is equal to 6.1 ppm.

Polymerization

A 50 cc flask was charged in nitrogen atmosphere with the above catalyst component solution in an amount of 1 milligram-atom as the zirconium (Zr) atom and 1 ml solution of 1 mmol/ml of methylaluminoxane. The admixture was stirred at room temperature for 30 minutes. The resulting contact reaction product was polymerized by the procedure of Inventive Example 1, thereby obtaining 112 grams white polymer having a catalytic activity of 112 kg/gZr, MFR of 3.8 g/10 min, a density of 0.9252 g/cm$^2$, MP of 118.9°C and Mw/Mn of 2.2.

Inventive Example 14

The following reaction was carried out using the catalyst component of Inventive Example 1.

A 50 ml flask was charged in nitrogen atmosphere with the above catalyst component solution in an amount of 0.1 mmol-atom as the zirconium (Zr) atom and 10 ml solution of 1 mmol/ml methylaluminoxane. The admixture was stirred at room temperature for 1 hour.

A 50 ml three-necked flask was charged with 2 grams $SiO_2$ (Fuji Davison #952, surface area 300 m$^2$/g) that had been calcined in nitrogen atmosphere at 600°C for 5 hours and 10 ml refined toluene, followed by addition of total weight of the above solution. The solvent was removed by means of a blow or nitrogen in vacuum, thereby providing a particulate solid catalyst having a fluidity property.

Porimerization

A reaction loop was formed with a stirrer fitted with stainless steel autoclave, a blower, a flow controller and a dry cyclon. The temperature of the autoclave was regulated with a flow of warm water through its jacket. The polymerization

reaction was carried out via the above loop for 8 hours, in which the above solid catalyst and a toluene solution of methylaluminoxane (1 mmol/l concentration) were taken at a rate of 100 mg/hr and 1 ml/h respectively into the autoclave held at 60°C, followed by supply of a mixed gas of butene-1 and ethylene at a molar ratio of 0.25 in the gaseous phase to maintain a total system pressure at 8 kgf/cm2. The resulting polymer was withdrawn intermittently while the gas in the system was being circulated.

Analysis indicated a catalytic activity of 420 kg/gZr, MFR of 0.01 g/10 min, a density of 0.9232 g/$cm^2$, a bulk density of 0.42 g/$cm^3$ and MP of 111.3°C,

Inventive Example 15

The following reaction was carried out using the transitional metal catalyst component of Inventive Example 2.

A 50 ml three-necked flask was charged in nitrogen atmosphere with 2 grams $SiO_2$ (Fuji Davison #952, surface area 300 m2/g) that had been calcined at 600°C for 5 hours and 10 ml refined toluene, followed by addition of 3 ml of one mmol/ml methylaluminoxane. The admixture was stirred at room temperature for 2 hours to provide a slurry.

The slurry was admixed with the above catalyst solution in an amount of 0.1 mmol-atom as the zirconium (Zr) atom. The solvent was removed by means of a blow of nitrogen in vacuum thereby providing a fluidized solid catalyst.

Porimerization

The procedure of Inventive Example 14 was followed whereby there was obtained an ethylene copolymer having a catalytic activity of 355 kg/gZr, MFR of 2.8 g/10 min, a density of 0.9218 g/$cm^2$, a bulk density of 0.41 g/$cm^3$ and MP of 113.3°C.

Inventive Example 16

The following reaction was carried out using the transitional metal catalyst component of Inventive Example 3.

A 50 ml flask was charged in nitrogen atmosphere with the above catalyst component solution in an amount of 0.2 mmol-atom as the zirconium (Zr) atom and 14 ml solution of 1 mmol/ml of methylaluminoxane. The admixture was stirred at room temperatuer for one hour to provide a solution.

A 50 ml three-necked flask was charged with 2 grams $SiO_2$ (Fuji Davison #952, surface area 300 $m^2$/g) that had been calcined in nitrogen atmosphere at 600°C for 5 hours and 10 ml refined toluene, followed by addition of 3 ml toluene solution of one mmol/ml triethylaluminium. The admixture was stirred at room temperature for 2 hours to provide a slurry.

The slurry was admixed with total weight of the above catalyst solution. The solvent was removed by means of a blow of nitrogen in vacuum thereby providing a fluidized solid catalyst.

The procedure of Inventive Example 14 was followed whereby there was obtained an ethylene copolymer having a catalytic activity of 299 kg/gZr, MFR of 2.8 g/10 min, a density of 0.9252 g/$cm^2$, a bulk density of 0.40 g/$cm^3$ and MP of 114.3°C.

Inventive Example 17

The following reaction was carried out using the catalyst component of Inventive Example 4.

A 50 ml flask was charged in nitrogen atmosphere with the above catalyst component solution in an amount of 0.2 mmol-atom as the zirconium (Zr) atom and 13 ml solution of 1 mmol/ml methylaluminoxane. The admixture was stirred at room temperatuer for one hour to provide a solution.

A 50 ml three-necked flask was charged in nitrogen atmosphere with 2 grams $SiO_2$ (Fuji Davison #952, surface area 300 $m^2$/g) that had been calcined in nitrogen atmosphere at 600°C for 5 hours and 10 ml refined toluene, followed by addition of 0.7 mg of n-butoxy zirconium. The admixture was stirred at room temperature for 2 hours to provide a slurry.

The slurry was admixed with total weight of the above catalyst solution. The solvent was removed by means of a blow of nitrogen in vacuum thereby providing a fluidized solid catalyst.

The procedure of Inventive Example 14 was followed whereby there was obtained an ethylene copolymer having a catalytic activity of 178 kq/gZr, MFR of 6.6 g/10 min, a density of 0.9278 g/$cm^2$, a bulk density of 0.39 g/$cm^3$ and MP of 117.0 °C.

Inventive Example 18

The following reaction was carried out using the catalyst component of Inventive Example 5.

A 50 ml flask was chraged with 2 grams alumina and 10 ml refined toluene. The admixture was stirred at room temperature for 2 hours, followed by addition of the solution of the catalyst component of Inventive Example 5 in amount of 0.2 mmol-atom as the Zirconium (Zr) atom. The admixture was was stirred at room temperature for one hour, followed by removal of the solvent by means of a blow of nitrogen in vacuum therby providing a fluidized solid catalyst.

The procedure of Inventive Example 14 was followed whereby there was obtained an ethylene copolymer having a catalytic activity of 173 kg/gZr, MFR of 4.9 g/10 min, a density of 0.9217 g/$cm^2$, a bulk density of 0.39 g/$cm^3$ and MP of 116.2 °C.

Inventive Example 19

The following reaction was carried out using the catalyst component of Inventive Example 6.

A 50 cc flask was charged with the above catalyst component solution in an amount of 0.1 mmol-atom as the zirconium (Zr) atom and 0.1 mmol trityltetra(pentafluorophenyl)borate. The admixture was stirred at room temperatuer for 30 minutes.

A 50 ml three-necked flask was charged with 2 grams SiO2 (Fuji Davison #952, surface area 300 $m^2$/g) that had been calcined in nitrogen atmosphere at 600°C for 5 hours and 10 ml refined toluene, followed by addition of 0.75 gram of butanol. The admixture was stirred at room temperature for 2 hours, followed by nitrogen blow to remove the solvent in vacuum. The resulting powdery material was admixed with 10 ml toluene and 7.5 ml solution of 1 mmol/ml methylaluminoxane and then stirred at room temperature for one hour to provide a slurry.

The slurry was admixed with total weight of the above catalyst solution, followed by removal of the solvent by nitrogen blow in vacuum.

The procedure of Inventive Example 14 was followed whereby there was obtained an ethylene copolymer having a catalytic activity of 418 kg/gZr, MFR of 2.1 g/10 min, a density of 0.9201 g/$cm^2$, a bulk density of 0.45 g/$cm^3$ and MP of 114.0°C.

Inventive Example 20

The following reaction was carried out using the transitional metal catalyst component of Inventive Example 7.

A 50 cc flask was charged in nitrogen atmosphere with the above catalyst component solution in an amount of 0.2 mmol-atom as the zirconium (Zr) atom and 0.2 mmol tri(pentafluorophenyl)borane. The admixture was stirred at room temperatuer for 30 minutes.

A 50 ml three-necked flask was charged in nitrogen atmosphere with 2 grams SiO2 (Fuji Davison #952, surface area 300 $m^2$/g) that had been calcined at 600°C for 5 hours and 10 ml refined toluene, followed by addition of 3 ml toluene solution of one mmol/ml triethylaluminum. The admixture was stirred at room temperature for 2 hours to provide a slurry. The slurry was admixed with total weight of the above catalyst solution. The solvent was removed by means of a blow of nitrogen in vacuum thereby providing a fluidized solid catalyst.

The procedure of Inventive Example 14 was followed whereby there was obtained an ethylene copolymer having a catalytic activity of 301 kg/gZr, MFR of 0.08 g/10 min, a density of 0.9192 g/$cm^2$, a bulk density of 0.45 g/$cm^3$ and MP of 110.6°C.

Inventive Example 21

The following reaction was carried out using the transitional metal catalyst component of Inventive Example 1.

A 50 ml flask was charged in nitrogen atmosphere with the above catalyst component solution in an amount of 0.2 mmol-atom as the zirconium (Zr) atom and 0.2 mmol triethylammoniumtetra(pentafluorophenyl)borate. The admixture was stirred at room temperatuer for 30 minutes.

A 50 ml three-necked flask was charged with 2 grams silica-alumina (surface area 200 m2/g) that had been calcined in nitrogen atmosphere at 600°C for 5 hours and 10 ml refined toluene, followed by addition of 3 ml solution of one mmol/ml methylaluminoxane. The admixture was stirred at room temperature for 2 hours to provide a slurry.

The slurry was admixed with total weight of the above catalyst solution. The solvent was removed by means of a blow of nitrogen in vacuum thereby providing a fluidized solid catalyst.

The procedure of Inventive Example 14 was followed whereby there was obtained an ethylene copolymer having catalytic activity of 294 kg/gZr, MFR of 0.8 g/10 min, a density of 0.9211 g/$cm^2$, a bulk density of 0.42 g/$cm^3$ and MP of 112.2°C.

Inventive Example 22

The following reaction was carried out using the catalyst component of Inventive Example 1.

A 50 ml flask was charged in nitrogen atmosphere with the above catalyst component solution in an amount of 0.1 mmol-atom as the zirconium (Zr) atom and 10 ml solution of one mmol/ml methylaluminoxane. The admixture was stirred at room temperatuer for one hour.

A 100 ml flask was charged in nitrogen atmosphere with 2 grams polyethylene powder which had been dried at 80°C for 5 hours (a linear low-density polyethylene having MFR of 1.0 g/10 min., a bulk density of 0.41 $g/cm^3$ and a particle size of 500 µm) and 6.3 ml solution of 1mmol/ml of methylaluminoxane. The admixture was stirred at room temperature for one hour, followed by addition of total weight of the above catalyst component solution and with nitrogen blow to remove the solvent in vacuum thereby obtaining a fluidized solid catalyst.

The procedure of Inventive Example 14 was followed whereby there was obtained an ethylene copolymer at a catalytic activity of 221 kg/gZr, MFR of 11 g/10 min, a density of 0.9212 $g/cm^2$, a bulk density of 0.31 $g/cm^3$ and MP of 113.2°C.

Inventive Example 23

The procedure of Inventive Example 14 was followed for the homopolymerization of ethylene in the presence of the same catalyst except that the autoclave was supplied solely with an ethylene gas. Catalytic activity was 236 kg/gZr. The resulting ethylene polymer had MFR of 0.03 g/10 min., a density of 0.9521 $g/cm^3$, a bulk density of 0.41 $g/cm^3$ and MP of 132.1°C.

Comparative Example 3

The following reaction was carried out using the catalyst component of Comparative Example 3.

A 50 cc flask was charged with the above catalyst component solution in an amount of 0.1 mmol-atom as the zirconium (Zr) atom and 10 ml solution of one mmol/ml methylaluminoxane. The admixture was stirred at room temperatuer for one hour.

A 50 ml three-necked flask was charged with 2 grams $SiO_2$ (Fuji Davison #952, surface area 300 $m^2/g$) that had been calcined in nitrogen atmosphere at 600°C for 5 hours and 10 ml refined toluene, followed by addition of total weight of the above solution. The solvent was removed by means of a blow of nitrogen in vacuum thereby providing a fluidized solid catalyst.

Polymerization

The resulting contact reaction product was polymerized by the procedure of Comparative Example 1, thereby obtaining a polymer having a catalytic activity of 158 kg/gZr, MFR of 0.8 g/10 min, a density of 0.9212 $g/cm^2$, MP of 115.9°C and Mw/Mn of 2.4.

Inventive Example 24

There was disposed still a mixture of the catalyst component solution in amount of 1 milliqram-atom as the zirconium (Zr) atom and 1 ml of 1mmol/ml methylaluminoxane for one month.

Polymerization

A 3 litter stainless steel autoclave equipped with a stirrer was purged with nitrogen, followed by addition of 200 grams dried ocean sand, total weight of the above catalyst component solution. The admixture was heated to 75°C wirh stirring and charged with a mixed gas (butene-1/ethylene molar ratio 0.25) to bring the reactor pressure up to 9 $kgf/cm^2G$, whereupon polymerization reaction was initiated and continued for 1 hour with continued charge of a mixed gas of ethylene and butene-1 (butene-1/ethylene molar ratio 0.05) to maintain a total pressure at 9 $kgf/cm^2G$.

Upon completion of the reaction, excess gases were expelled and the autoclave was cooled, followed by removal of the sand. Analysis of the resulting 215 grams white polymer indicated a catalytic activity of 215 kg/gZr, a metal flow rate (MFR) of 0.2 g/10 min, a density of 0.9222 $g/cm^2$, a melting point (MP) of 114.6°C and Mw/Mn of 3.2.

**Claims**

1. A catalyst component for the polyemrization of olefinic hydrocarbons which comprises a modified metallocene compound derived from a starting metallocene compound represented by formula

$$R^1{}_pMe^1X^1{}_{4-p} \text{ or } R^1{}_2Me^1X^{1'} \quad \text{I}$$

wherein $Me^1$ is a transition metal of Group IVa in the Periodic Table, $R^1$ is a ligand selected from the group consisting of a cyclopentadienyl group, a substituted cyclopentadienyl group, an indenyl group, a substituted indenyl group, a fluorenyl group and a substituted fluorenyl group, which may be bonded together through a $C_2$-$c_{18}$ hydrocarbon group and/or a silylene group, said substituted cyclopnetadineyl, said substituted indenyl group and said substituted fluorenyl group each having at least one hydrogen atom directly bonded to their respective 5-member rings, $X^1$ is a halogen atom, a hydrogen atom or a $C_1$-$C_{24}$ hydrocarbon moiety, p is $1 \leq p \leq 4$ and $X^{1'}$ is a $C_1$-$C_{20}$ alkylidene group;
said modified metallocene compound having a 5-member ring in each of said ligands free of hydrogen peak in 1H-NHR spectrum.

**2.** A catalyst component according to claim 1, wherein said modified metallocene compound is an admixture of said metallocene compound solved in a solution of an aromaric hydrocarbon such as toluene, xylene and mesitylene with a compound of the formula

$$Me^2R^2{}_m(OR^3)_nX^2{}_{z-m-n} \quad \text{II}$$

wherein $Me^2$ is an element of Groups I - III in the Periodic Table, $R^2$ and $R^3$ each are $C_1$-$C_{24}$, straight or branched hydrocarbon groups, $X^2$ is a halogen atom such as fluorine, iodine, chlorine and bromine or a hydrogen atom, provided that $X^2$ is an hydrogen atom, $Me^2$ is an element of Group III in the Periodic Table, z is a valence of Me2, m and n are $0 \leq m \leq z$, $0 \leq n \leq z$ and $0 < m+n \leq z$;
and an organocyclic compound having a conjugated double bond.

**3.** A catalyst component according to claim 1 further including an inorganic and/or particulate polymer carrier.

**4.** A catalyst component according to claim 1 wherein said starting metallocene compound is selected from the group consisting of bisindenyldimethylzirconium, bisindenyldiphenylzirconium, bisindenyldichlorozirconium, bisindenyldibenzylzirconium, bisfluorenyldimethylzirconium, bisfluorenyldiphenylzirconium, bisfluorenyldichlorozirconium, bisfluorenyldibenzylzirconium, biscyclopentadienyldimethylzirconium, biscyclopentadienyldiphenylzirconium, biscyclopentadienyldichlorozirconium and biscyclopentadienyldibenzylzirconium.

**5.** A catalyst component according to claim 2 wherein said organocyclic compound is represented by the formula

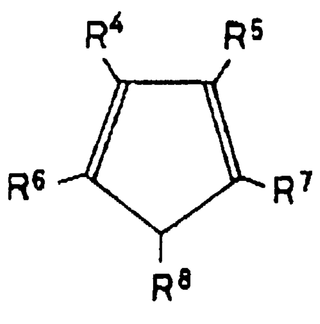

..... III

wherein $R^4$, $R^5$, $R^6$, $R^7$ and $R^8$ each are hydrogen a $C_1$-$C_{10}$ hydrocarbon group, any two of these hydrocarbon groups jointly forming a cyclic hydrocarbon.

**6.** A catalyst component according to claim 3 wherein said inorganic carrier is formed from a porous inorganic compound of the group consisting of a carbonaceous material, metal, metal oxide, metal chloride, metal carbonate and mixtures thereof and having a maximum length of 5 - 200 μm, a surface area of 50 - 1,000 $m^2/g$ and pore volume of 0.05 - 3 $cm^3$.

**7.** A catalyst component according to claim 3 wherein said particulate polymer carrier is formed from a thermoplastic

or thermosetting resin having an average particle size of 5 - 2,000 μm.

**8.** A catalyst component according to claim 2 wherein said compound of formula II is used in an amount of less than 100 mols, preferably 0.01 to 100 mols, more preferably 0.1 to 50 mols, particularly preferably 1 to 20 mols per mol of said metallocen compound.

**9.** A catalyst component according to claim 2 wherein said organocyclic compound is used in an amount of less than 100 mols, preferably 0.01 to 100 mols, more preferably 0.1 to 50 mols, particularly preferably 0.5 to 20 mols per mol of said metallocen compound.

**10.** A catalyst component according to claim 3 wherein said inorganic carrier and/or particulate polymer is used in an amount of 1 gram per 0.0001 - 5, preferably 0.001 - 0.5, more preferably 0.02 - 0.04 millimols of said metallocene compound.

**11.** A polymerization catalyst resulting from mutual contact of a modified metallocene compound with a modified organoaluminum compound having Al-O-Al bonds and borate and/or borane; said modified metallocene compound being derived from a starting metallocene compound represented by the formula

$$R^1{}_pMe^1X^1{}_{4-p} \text{ or } R^1{}_2Me^1X^{1'} \qquad \text{I}$$

wherein $Me^1$ is a transition metal of Group IVa in the Periodic Table, $R^1$ is a ligand selected from the group consisting of a cyclopentadienyl group, a substituted cyclopentadienyl group, an indenyl group, a substituted indenyl group, a fluorenyl group and a substituted fluorenyl group, which may be bonded together through a $C_2$-$C_{18}$ hydrocarbon group and/or a silylene group, said substituted cyclopnetadineyl, said substituted indenyl group and said substituted fluorenyl group each having at least one hydrogen atom directly bonded to their respective 5-member rings, $X^1$ is a halogen atom, a hydrogen atom or a $C_1$-$C_{24}$ hydrocarbon moiety, p is $1 \leq p \leq 4$ and $x^{1'}$ is a $C_1$-$C_{20}$ alkylidene group;
said modified metallocene compound having a 5-member ring in each of said ligandsfree of hydrogen peak in 1H-NHR spectrum.

**12.** A catalyst according to claim 11 wherein said catalyst component includes an inorganic and/or particulate polymer carrier.

**13.** A polymerization catalyst resulting from mutual contact of a metallocene compound with a modified organoaluminum compound having Al-O-Al bonds and borate and/or borane; said metallocene compound being represented by the formula

$$R^1{}_pMe^1X^1{}_{4-p} \text{ or } R^1{}_2M_e{}^1X^{1'} \qquad \text{I}$$

wherein $Me^1$ is a transition metal of Group IVa in the Periodic Table, $R^1$ is a ligand selected from the group consisting of a cyclopentadienyl group, a substituted cyclopentadienyl group, an indenyl group, a substituted indenyl group, a fluorenyl group and a substituted fluorenyl group, which may be bonded together through a $C_2$-$C_{18}$ hydrocarbon group and/or a silylene group, said substituted cyclopnetadineyl, said substituted indenyl group and said substituted fluorenyl group each having at least one hydrogen atom directly bonded to their respective 5-member rings, $X^1$ is a halogen atom, a hydrogen atom or a $C_1$-$C_{24}$ hydrocarbon moiety, p is $1 \leq p \leq 4$ and $X^{1'}$ is a $C_1$-$C_{20}$ alkylidene group;
said catalyst having a 5-member ring in each of said ligands free of hydrogen peak in 1H-NMR spectrum.

**14.** A catalyst according to cairn 11 or 13 wherein said modified organoaluminum compound is derived from the reaction of an organoaluminum compound with water, said organoaluminum compound being of the formula

$$R^{10}{}_cAlX^4{}_{3-c} \qquad \text{V}$$

wherein $R^{10}$ is a hydrocarbon group such as an alkyl, alkenyl, aryl and aralkyl group of 1 to 18 carbon atoms,

$X^4$ is a hologen or hydrogen atom, and c is an integer of $1 \leq c \leq 3$.

**15.** A catalyst according to claim 11 or 13 wherein said modified organoaluminum compound is used in an amount of from 1 to 100,000, preferably 5 to 1,000, more preferably 50 to 50 to 100, by an atomic ratio of aluminum in said compound to transition metal $Me^1$ in said metallocene compound.

**16.** A catalyst according to claim 11 or 13 wherein said borate and/or borane compound is used in an amount of from 0.01 to 100, preferably 0.1 to 50, more preferably 0.2 to 10 moles per mol of said metallocene compound.

**17.** A process for the production of olefinic polymers or copolymers in the presence of the catalyst accoding to claim 11 or 13.

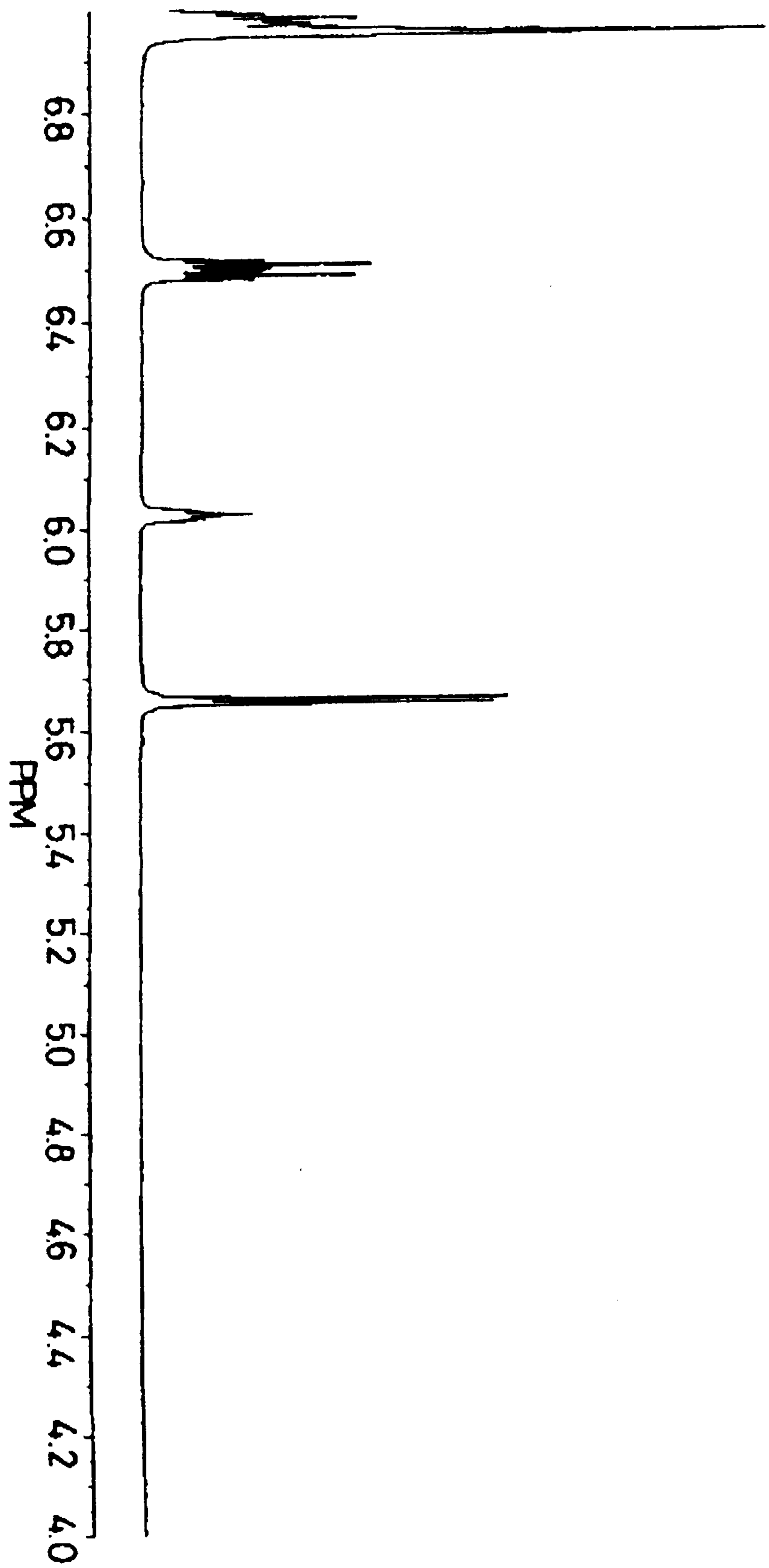


FIG. 1

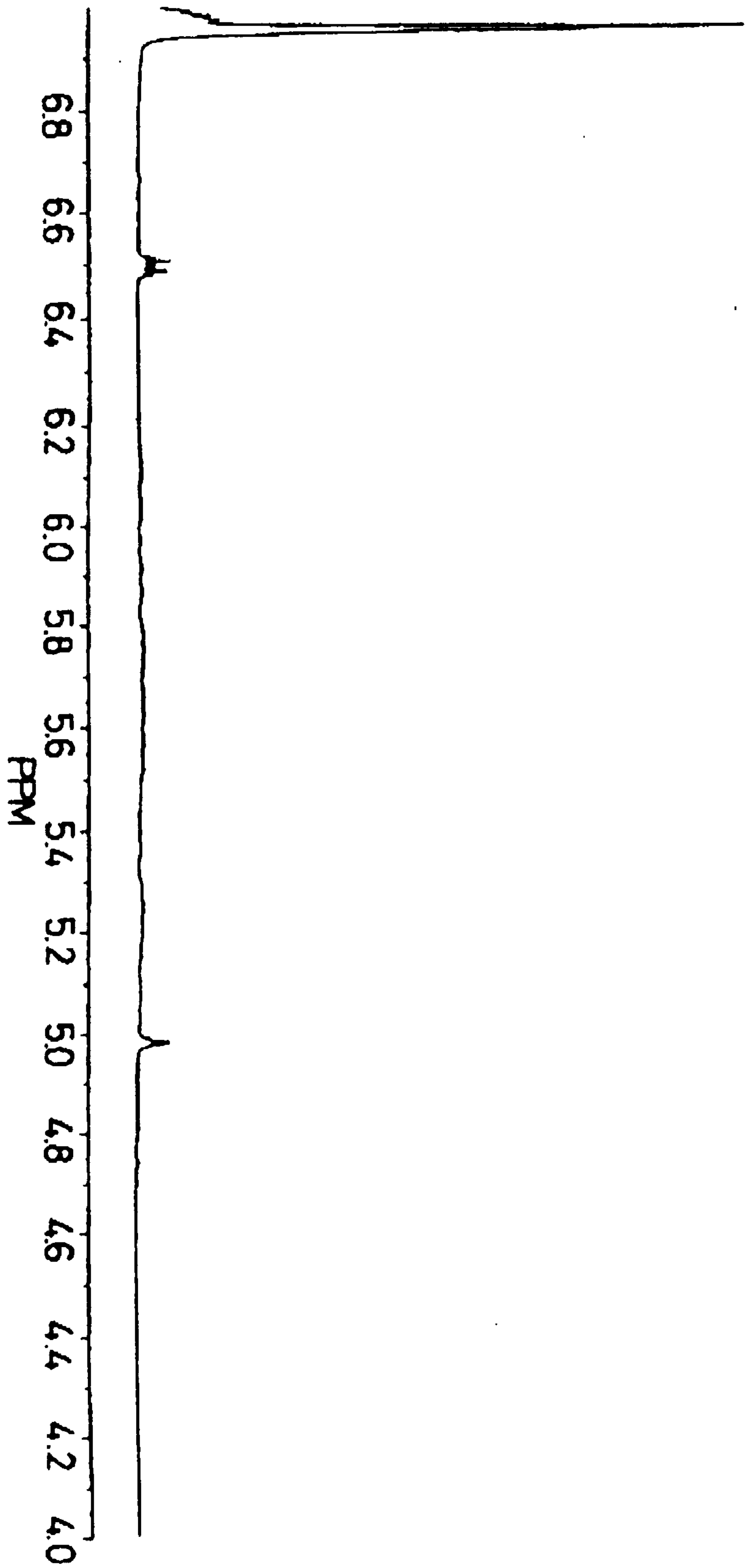


FIG. 2

European Patent Office

# EUROPEAN SEARCH REPORT

Application Number
EP 96 85 0163

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-C-43 44 672 (BASF AG)<br>* claims *<br>--- | 1,3,4,<br>11-13,17 | C08F4/642<br>C08F10/02 |
| X | EP-A-0 302 424 (HOECHST AG)<br>* claims; page 7, example 1*<br>--- | 1,4,11,<br>13,14 | |
| X | EP-A-0 478 913 (EXXON CHEMICAL PATENTS INC)<br>* claims; examples 1 and 2 *<br>--- | 1 | |
| A | EP-A-0 546 690 (NIPPON OIL CO LTD)<br>* claims; page 2, lines 19-22 *<br>--- | 1-17 | |
| A | EP-A-0 587 440 (NIPPON OIL CO LTD)<br>* claims; page 2, lines 22-26 *<br>----- | 1-17 | |

TECHNICAL FIELDS SEARCHED (Int.Cl.6)

C08F

The present search report has been drawn up for all claims

| Place of search | Date of completion of the search | Examiner |
|---|---|---|
| THE HAGUE | 12 December 1996 | Mergoni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)